(19) Europäisches Patentamt
European Patent Office
Office européen des brevets

(11) **EP 2 507 111 B1**

(12) **EUROPÄISCHE PATENTSCHRIFT**

(45) Veröffentlichungstag und Bekanntmachung des Hinweises auf die Patenterteilung:
**08.10.2014 Patentblatt 2014/41**

(51) Int Cl.:
***B62D 1/28*** *(2006.01)*    ***B62D 15/02*** *(2006.01)*
***B60W 30/045*** *(2012.01)*    ***B60W 30/12*** *(2006.01)*

(21) Anmeldenummer: **10790369.2**

(22) Anmeldetag: **30.11.2010**

(86) Internationale Anmeldenummer:
**PCT/EP2010/068530**

(87) Internationale Veröffentlichungsnummer:
**WO 2011/067252 (09.06.2011 Gazette 2011/23)**

(54) **VERFAHREN UND STEUERGERÄT ZUR BESTIMMUNG EINER SCHNITTTRAJEKTORIE EINES KURVENABSCHNITTS EINER FAHRBAHN**

METHOD AND CONTROLLER FOR DETERMINING AN INTERSECTION TRAJECTORY OF A CURVE SECTION OF A ROADWAY

PROCEDE ET APPAREIL DE COMMANDE POUR DETERMINER UNE TRAJECTOIRE DE COUPE D'UN TRONÇON DE VIRAGE D'UNE CHAUSSEE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2009 DE 102009047476**

(43) Veröffentlichungstag der Anmeldung:
**10.10.2012 Patentblatt 2012/41**

(73) Patentinhaber: **Robert Bosch GmbH
70442 Stuttgart (DE)**

(72) Erfinder:
• **BUERKLE, Lutz
71229 Leonberg (DE)**
• **FISCHER, Michael
73262 Reichenbach/Fils (DE)**
• **MAURER, Thomas
91564 Neuendettelsau (DE)**

(56) Entgegenhaltungen:
**EP-A1- 2 116 440        DE-A1-102008 003 666
US-A1- 2006 030 987**

**Beschreibung**

Stand der Technik

Die vorliegende Erfindung bezieht sich auf ein Verfahren zur Bestimmung einer Trajektorie eines Kurvenabschnitts einer Fahrbahn, ein Steuergerät sowie ein Computerprogrammprodukt.

Lane Keeping Support (LKS) bezeichnet Spurhaltesysteme, die den Fahrer durch gerichtete Lenkmomente beim Halten des Fahrzeugs in der Fahrspur unterstützen. Erste LKS Systeme wurden bereits in den europäischen Markt eingeführt. Sie umfassen ein Fahrspur-Erkennungssystem, mit dem der Fahrspurverlauf vor dem Fahrzeug, beispielsweise die Krümmung und die Krümmungsänderung, sowie die relative Position des Fahrzeuges in der Fahrspur, beispielsweise der Lateralabstand und der Differenzwinkel, bestimmt werden können. Dazu wird der Verkehrsraum vor dem Fahrzeug mit einer Videokamera erfasst und die Grauwertbilder in einem Steuergerät ausgewertet. Gegebenenfalls können bei der Bestimmung von Fahrspurinformationen auch Daten weiterer Umfeldsensoren sowie Informationen aus der digitalen Karte zur Stützung und Erweiterung der videobasierten Spurinformationen einbezogen werden.

Die DE 10 2005 056 211 A1 beschreibt ein Verfahren zur Steuerung der Querbewegung eines Fahrzeugs, in dem der Verlauf einer vorausliegenden Fahrspur mindestens bis zu einer Vorausschauweite erfasst wird und eine SollTrajektorie für das Fahrzeug mittels einer Steuereinheit geplant wird.

Die DE 10 2008 003 666 A1 beschreibt ein Fahrerassistenzsystem, das den Verlauf eines von dem Fahrzeug befahrenen Fahrstreifens und die Position des Fahrzeugs in Bezug auf den Fahrstreifen erfasst und das Fahrzeug auf einer Trajektorie führt. Das Fahrerassistenzsystem legt die Trajektorie in Abhängigkeit von dem Fahrerwunsch fest.

Offenbarung der Erfindung

Vor diesem Hintergrund wird mit der vorliegenden Erfindung ein Verfahren zur Bestimmung einer Schnitttrajektorie, die ein Schneiden eines Kurvenabschnitts einer Fahrbahn durch ein Fahrzeug ermöglicht, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Auf Basis eines Fahrspurverlaufs sowie auf Basis von Fahrzustandsgrößen kann abhängig von einer aktuellen Fahrsituation eines Fahrzeugs eine Solltrajektorie ermittelt werden, um das Fahrzeug mit einem kontinuierlichen Lenkeingriff sicher in der Fahrspur zu führen. Diese Trajektorie kann in der Mitte zwischen der linken und rechten Fahrspurbegrenzung liegen. Es kann also unabhängig von den straßenbaulichen Gegebenheiten und insbesondere Kurven, auf die Fahrbahnmitte geregelt werden. Dies wirkt unangenehm auf den Fahrer, weil dies nicht seinem eigenen Fahrverhalten entspricht.

Wenn Kurven durchfahren werden, die in der eigenen Fahrspur breit genug sind, wird ein Fahrer intuitiv die Kurve schneiden. Dieses Fahrverhalten wird durch die Straßenverbreiterung in Kurven unbewusst unterstützt. Der Grund für das Kurvenschneiden liegt darin, dass die auf den Fahrer wirkende Querbeschleunigung unangenehm wirkt und daher verringert werden soll. Dies erreicht der Fahrer durch Verringerung der Kurvenkrümmung indem er die Kurve schneidet, also noch vor dem Kurvenbeginn mit dem Einlenken beginnt und sich sein Auto somit früher in die Kurve "eindreht". Damit wird die Kurve zum Fahrbahnrand hin geschnitten und es ist ein kleinerer maximaler Lenkwinkel zum Durchfahren der Kurve nötig, was einer kleineren Kurvenkrümmung entspricht. Somit erhöht sich in erster Linie der Fahrkomfort, aber auch die Fahrsicherheit.

Der erfindungsgemäße Ansatz kann beispielsweise von einem LKS-System umgesetzt werden und einen Nutzen aus der Möglichkeit des Kurvenschneidens innerhalb der eigenen Fahrspur ziehen.

Die Erfindung basiert auf der Erkenntnis, dass die Möglichkeit des Kurvenschneidens bei der Trajektorienplanung für ein Spurhaltesystem eines Fahrzeugs berücksichtigt werden kann.

Kern der Erfindung ist ein Algorithmus für das Schneiden von Kurven in der eigenen Fahrspur bei Anwendung mit einem Fahrassistenzsystem zur Querführung eines Fahrzeugs. Damit kann die Kurvenstabilität erhöht und mehr Komfort erreicht werden.

Erfindungsgemäß kann das Kurvenschneiden innerhalb der eigenen Fahrspur durch einen Algorithmus ermöglicht werden, der den horizontalen Streckenverlauf mit einer bestimmten Vorrausschauweite kennt. Das Schneiden der Kurven kann in seinem Maß für den Fahrer selbst parametrierbar sein, um eine dem Fahrer eigene Fahrweise in Kurven nachzubilden. Daraus ergeben sich ein angenehmeres Fahrgefühl sowie mehr Fahrsicherheit.

Vorteilhafterweise kann die Querbeschleunigung beim Durchfahren von Kurven aller Art systematisch verringert werden. Dabei kann ein Algorithmus dafür sorgen, dass innerhalb bestimmter Grenzen eine Trajektorie so geplant wird, dass die Kurven leicht und für den Fahrer angenehm geschnitten werden. Dadurch entsteht ein Sicherheits- und Komfortgewinn für die Fahrzeuginsassen.

Ferner kann die Fahrspur unter Berücksichtigung des menschlichen Lenkverhaltens und der "Richtlinie für die Anlage von Straßen" (RAS) geplant werden. Dies bedeutet, dass die Trajektorie mit Hilfe von Klotoidensegmenten geplant werden kann. Insbesondere kann der kontinuierliche Straßenkrümmungsverlauf beibehalten werden, um ein bestmögliches und fahrerähnliches Lenkverhalten zu erzielen. Dies bedeutet, dass keine unnatürlichen Lenkbewegungen erfolgen, also dass nur konstante und gleichmäßig ansteigende oder abfallende Lenkwinkel gebraucht werden. Also wird z.B. für die Einfahrt in eine Kurve eine konstante Lenkwinkeländerungsgeschwindigkeit erzielt. Dies führt zu menschenähnlicher komfortabler Fahrzeugquerführung.

Von Vorteil ist auch, dass eine Verbreiterung der Fahrbahn in Kurven sinnvoll ausgenützt werden kann. Der Grad des Kurvenschneidens ist auf Wunsch vom Fahrer selbst einstellbar, auch während der Fahrt. Dadurch, dass sich die vom System gefahrene Trajektorie am Fahrerverhalten orientieren kann, kann die Kundenakzeptanz für das LKS-System erhöht werden.

Mit einer videobasierten Spurerkennung und einer Positionsortung sowie einer digitalen Karte können ausschließlich vorhandene Sensoren verwendet werden.

Die vorliegende Erfindung schafft ein Verfahren zur Bestimmung einer Trajektorie, die ein Schneiden eines Kurvenabschnitts einer Fahrspur durch ein Fahrzeug ermöglicht, das die folgenden Schritte umfasst: Empfangen einer Information über den Kurvenabschnitt über eine Schnittstelle; Unterteilen des Kurvenabschnitts in ein Geradensegment mit einer Geradenlänge, in ein Klotoidensegment mit einer Klotoidenlänge, einer Klotoidenstartkrümmung und einem Klotoidenparameter sowie in ein Kreisbogensegment mit einer Kreisbogenlänge und einer Kreisbogenkrümmung; Bestimmen einer Geradentrajektorie für das Geradensegment, einer Klotoidentrajektorie für das Klotoidensegment und einer Kreisbogentrajektorie für das Kreisbogensegment, basierend auf einer Einstellvorschrift, die ausgebildet ist, um die Geradenlänge, die Klotoidenlänge, die Klotoidenstartkrümmung, den Klotoidenparameter, die Kreisbogenlänge und die Kreisbogenkrümmung so einzustellen, dass eine Krümmung der Klotoidentrajektorie und eine Krümmung der Kreisbogentrajektorie jeweils geringer ist, als eine maximale Krümmung des Kurvenabschnitts; und Bestimmen der Schnitttrajektorie aus der Geradentrajektorie, der Klotoidentrajektorie und der Kreisbogentrajektorie.

Bei dem Kurvenabschnitt kann es sich um einen, in Fahrtrichtung vor dem Fahrzeug liegenden Fahrbahnabschnitt handeln, der eine Krümmung aufweisen kann. Die Information über den Kurvenabschnitt kann beispielsweise einen Verlauf des Kurvenabschnitts, einen Verlauf der Krümmungen innerhalb des Kurvenabschnitts, beispielsweise über die Strecke, spezielle Charakteristika des Kurvenabschnitts oder einen Verlauf einer Breite der Fahrspur in dem Kurvenabschnitt definieren. Die Information über den Kurvenabschnitt kann eine Information repräsentieren, die von einer vorrausschauenden Umfeldsensorik oder einer Datenbank mit entsprechenden Fahrbahninformationen bereitgestellt werden kann. Zur Lokalisierung eines speziellen Kurvenabschnitts kann eine, von einem Standortbestimmungssystem bereitgestellte Information eingesetzt werden. Das Klotoidensegement kann einen Übergangsbogen darstellen, dessen Krümmungsverlauf linear zunimmt. Der Klotoidenparameter kann dabei eine Steigung des Krümmungsverlaufs definieren. Das Kreisbogensegment kann einen einheitlichen Krümmungsradius aufweisen. Eine Krümmungsrichtung des Klotoidensegments und des Kreisbogensegments kann einer Krümmungsrichtung des Kurvenabschnitts entsprechen. Somit kann der Kurvenabschnitt durch das Geradensegment, das Klotoidensegment und das Kreisbogensegment dargestellt werden. Die Schnitttrajektorie kann eine Bewegungsbahn des Fahrzeugs durch den Kurvenabschnitt repräsentieren. Dabei kann die Schnitttrajektorie einen geringeren maximalen Krümmungsradius als eine Trajektorie aufweisen, die mittig zur Fahrspur durch den Kurvenabschnitt führt. Die führt dazu, dass die Kurve nicht entlang einer gedachten Mittelline ausgefahren, sondern geschnitten wird. Die Einstellvorschrift kann ausgebildet sein, um einstellbare Parameter, wie die Klotoidenlänge, die Klotoidenkrümmung, die Kreisbogenlänge und die Kreisbogenkrümmung basierend auf vorbestimmten oder einstellbaren Randbedingungen, beispielsweise eine maximale Ablage zwischen der Schnitttrajektorie und der Fahrspurmitte, einzustellen. Dazu können geeignete Einstellalgorithmen eingesetzt werden. Dabei kann die Einstellvorschrift ausgebildet sein, um einen, mehrere oder alle der Parameter einzustellen. Durch die Parameter können Verläufe der Geradentrajektorie, der Klotoidentrajektorie und der Kreisbogentrajektorie eingestellt werden. Die Schnitttrajektorie kann durch ein Aneinanderreihen der Geradentrajektorie, der Klotoidentrajektorie und der Kreisbogentrajektorie erstellt werden.

Zusätzlich zu dem Klotoidensegement und dem Kreisbogensegment kann der Kurvenabschnitt ferner in ein Geradensegment mit einer Geradenlänge unterteilt werden. Entsprechend dazu kann eine Geradentrajektorie für das Geradensegment, basierend auf der Einstellvorschrift bestimmt werden, wobei die Einstellvorschrift ausgebildet ist, um die Geradenlänge so einzustellen, dass die maximale Krümmung der Klotoidentrajektorie und die Krümmung der Kreisbogentrajektorie jeweils geringer ist, als die maximale Krümmung des Kurvenabschnitts. In diesem Fall kann die Schnitttrajektorie aus der Geradentrajektorie, der Klotoidentrajektorie und der Kreisbogentrajektorie bestimmt werden. Das Geradensegment bietet sich beispielsweise an, um einen Kurveneingang oder einen Kurvenausgang gemäß dem erfindungsgemäßen Ansatz umzusetzen. Auch wenn in den nachfolgenden Ausführungsformen und Ausführungsbeispielen auf das Geradensegment Bezug genommen wird, so sind die entsprechenden Beispiele auch ohne das Geradensegment durchführbar. Beispielsweise ist bei der Umsetzung einer sogenannten unsymmetrischen Kurve oder einer sogenannten S-Kurve typischerweise kein Geradensegment erforderlich.

Eine unsymmetrische Kurve ist dadurch gekennzeichnet, dass zwei Kreisbogensegmente mit unterschiedlichen Krümmungen gleichen Vorzeichens durch ein Klotoidensegment miteinander verbunden sind. Bei einer S-Kurve sind dagegen zwei Kreisbogensegmente mit verschiedenem Vorzeichen durch ein Klotoidensegment miteinander verbunden.

Die Einstellvorschrift kann ausgebildet sein, um die Geradentrajektorie, die Klotoidentrajektorie und die Kreisbogentrajektorie so zu bestimmen, dass die Schnitttrajektorie in einem Scheitelpunkt des Kurvenabschnitts eine vorbestimmte Ablage ins Kurveninnere in Bezug auf eine Trajektorie in der Mitte der Fahrspur aufweist. Die vorbestimmte Ablage kann fest oder durch den Fahrer vorgeben sein. Dabei kann die vorbestimmte Ablage abhängig von einer Breite der Fahrspur, insbesondere im Scheitelpunkt, variiert werden. Die vorbestimmte Ablage kann auch abhängig von einer Fahrzeuggeschwindigkeit und von einer maximalen Krümmung des Kurvenabschnitts gewählt werden.

Ferner kann die Einstellvorschrift ausgebildet sein, um die Geradentrajektorie, die Klotoidentrajektorie und die Kreisbogentrajektorie so zu bestimmen, dass eine Winkelrichtung eines Anfangspunktes der Schnitttrajektorie einer Winkelrichtung eines Anfangspunktes der Trajektorie auf der Mitte der Fahrspur entspricht und eine Winkelrichtung eines Endpunktes der Schnitttrajektorie einer Winkelrichtung eines Endpunktes der Trajektorie auf der Mitte der Fahrspur entspricht. Auf diese Weise können ruckartige Lenkbewegungen zu Beginn und am Ende des Kurvenabschnitts vermieden werden. Dieser Ansatz bedeutet, dass die Geradentrajektorie, die Klotoidentrajektorie und die Kreisbogentrajektorie gemäß der Einstellvorschrift so bestimmt werden können, dass das Fahrzeug, wenn es den Kurvenabschnitt entsprechend der Schnitttrajektorie befährt, die gleiche Gierwinkeländerung erfährt, wie wenn es den Kurvenabschnitt entsprechend der Trajektorie in der Mitte der Fahrspur befährt.

Dazu kann die Einstellvorschrift beispielsweise ausgebildet sein, um die Geradentrajektorie, die Klotoidentrajektorie und die Kreisbogentrajektorie unter Berücksichtigung einer Fahrzeuggeschwindigkeit und einer Krümmung des Kurvenabschnitts zu bestimmen. Somit können reale Parameter mit einbezogen werden, um die Schnitttrajektorie zu bestimmen.

Ein weiterer Kerngedanke der vorliegenden Erfindung besteht in einem Anfahren von Kurven. Dadurch kann der Radius der Fahrzeugtrajektorie, über das reine Kurvenschneiden hinaus, noch weiter vergrößert werden, und zwar durch eine optimale Ausnützung der gesamten zur Verfügung stehenden Fahrbahnbreite, ggf. auch des Fahrbahnraumes vor und nach der eigentlichen Kurve.

Dieser Ansatz des Anfahrens von Kurven basiert auf der Erkenntnis, dass das Fahrverhalten umso fahrgastfreundlicher ausfällt, je größer der gefahrene Radius, bzw. je kleiner die gefahrene Krümmung der Trajektorie des Fahrzeugs ist.

Aus der kleineren Krümmung resultiert eine verminderte Querbeschleunigung und Krafteinwirkung auf die Insassen. Vorteilhafterweise erhöht sich dadurch die Sicherheit, da das Fahrzeug weniger wahrscheinlich ausbricht. Zudem wird der Fahrgastkomfort erhöht, da geringere Seitenkräfte auf den Körper wirken. Alternativ ist auch eine höhere Geschwindigkeit beim Durchfahren der Kurve möglich.

Um das Anfahrens von Kurven zu berücksichtigen, schafft die vorliegende Erfindung ferner eine Ausführungsform eines Verfahrens zur Bestimmung einer Trajektorie, bei der die Einstellvorschrift ausgebildet ist, um in einem Bereich, der unmittelbar an den Kurvenabschnitt anschließt, eine weitere Geradentrajektorie, eine weitere Klotoidentrajektorie und eine weitere Kreisbogentrajektorie so zu bestimmen, dass eine weitere Schnitttrajektorie in dem Bereich eine weitere vorbestimmte Ablage in Bezug auf die die Mitte der Fahrspur aufweist. Dies ermöglicht ein Anfahren und Ausfahren der Kurve, um eine weitere Minimierung der Krümmung für die gesamte Kurventrajektorie zu erhalten. Mit anderen Worte ausgedrückt kann die Einstellvorschrift somit ausgebildet sein, um mindestens eine weitere Klotoiden- oder Kurventrajektorie zu bestimmen, die eine Krümmungsrichtung entgegengesetzt zu einer Krümmungsrichtung des Kurvenabschnitts aufweist. In diesem Fall kann die Schnitttrajektorie aus der Geradentrajektorie, der Klotoidentrajektorie, der Kreisbogentrajektorie und der mindestens einen weiteren Klotoidentrajektorie bestimmt werden.

Das erfindungsgemäße Verfahren kann in den unterschiedlichen Ausführungsformen ferner einen Schritt des Ermittelns einer auf der Schnitttrajektorie basierenden Querführung des Fahrzeugs umfassen, wobei die Querführung geeignet ist, um das Fahrzeug entlang der Schnitttrajektorie durch den Kurvenabschnitt zu steuern. Somit lässt sich das erfindungsgemäße Verfahren vorteilhaft für ein Spurhaltesystem einsetzen.

Um komplexere Fahrbahnverläufe abzubilden kann das erfindungsgemäße Verfahren einen Schritt des Unterteilens eines Streckenabschnitts der Fahrbahn in eine Mehrzahl von Kurvenabschnitten umfassen, die einen Kurveneingang, eine unsymmetrische Kurve , eine S-Kurve und/oder einen Kurvenausgang darstellen können. Für jeden der Mehrzahl der Kurvenabschnitte kann eine Schnitttrajektorie gemäß einem der vorangegangenen Ansprüche bestimmt werden und es kann eine Trajektorie für den Streckenabschnitt durch ein Aneinanderreihen der Schnitttrajektorien der Mehrzahl der Kurvenabschnitte gebildet werden. Dabei können die einzelnen Schnitttrajektorien sequentiell, also eine nach der anderen bestimmt werden. Es sind keine Iterationen erforderlich.

Die vorliegende Erfindung schafft ferner ein Verfahren zur Bestimmung einer Schnitttrajektorie, die ein Schneiden eines Kurvenabschnitts einer Fahrspur durch ein Fahrzeug ermöglicht, das die folgenden Schritte umfasst: Empfangen einer Information über den Kurvenabschnitt über eine Schnittstelle; Unterteilen des Kurvenabschnitts in mindestens ein Kurvensegment mit einer Segmentlänge und einer Startkrümmung, wobei das Kurvensegment entweder ein Geradensegment ist oder ein Kreisbogensegment ist oder ein Kurvensegment ist, dessen Krümmung eine Funktion einer Bogenlänge des Kurvensegments ist; Bestimmen einer Schnitttrajektorie aus dem mindestens einen Kurvensegment, so dass die Schnitttrajektorie in einem bestimmten Punkt des Kurvenabschnitts eine vorbestimmte Ablage in Bezug auf eine Mitte der Fahrspur aufweist.

Die Funktion einer Bogenlänge kann eine Ableitung darstellen. Beispielsweise kann die Krümmung eine zweite Ableitung der Bogenlänge sein. Bei dem bestimmte Punkt kann es sich um einen Scheitelpunkt, Mittelpunkt oder um einen anderen geeigneten Punkt des Kurvenabschnitts handeln. Das Verfahren kann unter Zuhilfenahme geeigneter Optimierungsverfahren umgesetzt werden. Das Kurvensegment kann ein Kreissegment, ein Klotoidensegment, ein Splinesegment und/oder ein Beziersegment umfassen. Auch wenn in den nachfolgenden Ausführungsformen und Ausführungsbeispielen auf das Geradensegment Bezug genommen wird, so sind die entsprechenden Beispiele auch ohne das Geradensegment durchführbar. Beispielsweise ist bei der Umsetzung einer sogenannten unsymmetrischen Kurve oder einer sogenannten S-Kurve typischerweise kein Geradensegment erforderlich.

Die Schnitttrajektorie kann mindestens ein Trajektoriensegment mit der Segmentlänge und der Startkrümmung umfassen, wobei das Trajektoriensegment entweder ein Geradensegment ist oder ein Kreisbogensegment ist oder ein Kurvensegment ist, dessen Krümmung eine Funktion der Bogenlänge des Trajektoriensegment ist.

Erfindungsgemäß wird die Schnitttrajektorie so bestimmt, dass eine maximale Krümmung der Schnitttrajektorie geringer ist, als eine maximale Krümmung des Kurvenabschnitts.

Gemäß einer Ausführungsform kann der Kurvenabschnitt in eine Mehrzahl von Kurvensegmenten mit einer Segmentlänge und einer Startkrümmung unterteilt werden, wobei die Startkrümmung einer Endkrümmung eines vorangehenden Kurvensegments entspricht, und dessen Krümmung entweder konstant über die Bogenlänge des Kurvensegments in Form eines Geradensegments oder Kreisbogensegment ist, oder sich linear mit der Bogenlänge des Kurvensegments in Form eines Klotoidensegment ändert.

Die Schnitttrajektorie kann in eine Mehrzahl von Trajektoriensegmenten mit einer Segmentlänge und einer Startkrümmung unterteilt werden, wobei die Startkrümmung der Endkrümmung eines vorangehenden Trajektoriensegments entspricht, und dessen Krümmung entweder konstant über die Bogenlänge des Trajektoriensegments in Form einer eines Geradensegments oder Kreisbogensegments ist oder sich linear mit der Bogenlänge des Trajektoriensegments in Form eines Klotoidensegments ändert.

Auch kann die Geradenlänge, die Klotoidenlänge, die Startkrümmung der Klotoide, der Klotoidenparameter, die Kreisbogenlänge und die Kreisbogenkrümmung so eingestellt werden, dass eine maximale Krümmung der Klotoidentrajektorie und eine Krümmung der Kreisbogentrajektorie jeweils geringer ist, als eine maximale Krümmung des Kurvenabschnitts, und bei dem eine Geradentrajektorie bestimmt wird, die dem Geradensegment zugeordnet ist, eine Klotoidentrajektorie bestimmt wird, die dem Klotoidensegment zugeordnet ist und eine Kreisbogentrajektorie bestimmt wird, die dem Kreisbogensegment zugeordnet ist, und bei dem die Schnitttrajektorie (330) aus der Geradentrajektorie, der Klotoidentrajektorie und der Kreisbogentrajektorie bestimmt wird.

Ferner können die Geradentrajektorie, die Klotoidentrajektorie und die Kreisbogentrajektorie so bestimmt werden, dass die Schnitttrajektorie in einem Scheitelpunkt, Mittelpunkt oder anderem geeigneten Punkt des Kurvenabschnitts eine vorbestimmte Ablage ins Kurveninnere in Bezug auf die Mitte der Fahrspur aufweist.

Ferner können die Geradentrajektorie, die Klotoidentrajektorie und die Kreisbogentrajektorie so bestimmt werden, dass eine Winkelrichtung der Schnitttrajektorie in einem Anfangspunkt einer Winkelrichtung der Mitte der Fahrspur in einem Anfangspunkt entspricht und eine Winkelrichtung der Schnitttrajektorie in einem Endpunkt einer Winkelrichtung der Mitte der Fahrspur in einem Endpunkt entspricht.

Die Geradentrajektorie, die Klotoidentrajektorie und die Kreisbogentrajektorie können unter Berücksichtigung einer Fahrzeuggeschwindigkeit und einer Kurvenabschnittskrümmung bestimmt werden.

In einem Bereich, der unmittelbar an den Kurvenabschnitt anschließt, können eine weitere Geradentrajektorie, eine weitere Klotoidentrajektorie und eine weitere Kreisbogentrajektorie so bestimmt werden, dass eine weitere Schnitttrajektorie in dem Bereich eine weitere vorbestimmte Ablage in Bezug auf die die Mitte der Fahrspur aufweist.

Ferner kann das Verfahren einen Schritt des Ermittelns einer auf der Schnitttrajektorie basierenden Querführung des Fahrzeugs umfassen, wobei die Querführung geeignet ist, um das Fahrzeug entlang der Schnitttrajektorie durch den Kurvenabschnitt zu steuern.

Auch kann das Verfahren einen Schritt des Unterteilens eines Streckenabschnitts der Fahrbahn in eine Mehrzahl von Kurvenabschnitten, die einen Kurveneingang, eine sich zuziehende oder sich öffnende Kurve, eine S-Kurve und/oder einen Kurvenausgang darstellen, und für jeden der Mehrzahl der Kurvenabschnitte eine Schnitttrajektorie gemäß einem der vorangegangenen Ansprüche bestimmt wird und wobei eine Trajektorie für den Streckenabschnitt durch ein Aneinanderreihen der Schnitttrajektorien der Mehrzahl der Kurvenabschnitte gebildet wird.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:

Fig. 1    ein Blockschaltbild eines Aufbaus einer Trajektorienplanung, gemäß einem Ausführungsbeispiel der vorliegenden Erfindung;

Fig. 2    ein Ablaufdiagramm eines Verfahrens, gemäß einem Ausführungsbeispiel der vorliegenden Erfindung;

Fig. 3    eine schematische Darstellung des Kurvenscheidens, gemäß einem Ausführungsbeispiel der vorliegenden Erfindung;

Fig. 4    eine schematische Darstellung von vier erfindungsgemäßen Basiselementen;

Fig. 5    eine schematische Darstellung des Kurvenscheidens, gemäß einem weiteren Ausführungsbeispiel der vorliegenden Erfindung;

Fig. 6a    eine schematische Darstellung einer Kurventrajektorie, gemäß einem Ausführungsbeispiel des Anfahrens von Kurven ;

Fig. 6b    eine weitere schematische Darstellung einer Kurventrajektorie, gemäß einem Ausführungsbeispiel des Anfahrens von Kurven;

Fig. 7    eine veranschaulichte Darstellung für die Formulierung der Rand- und Nebenbedingungen, gemäß einem weiteren Ausführungsbeispiel der vorliegenden Erfindung;

Fig. 8    eine Trajektorienplanung im x-y-Koordinatensystem, gemäß einem weiteren Ausführungsbeispiel der vorliegenden Erfindung;

Fig. 9    Randbedingungen im x-y-Verlauf der Trajektorie, gemäß einem weiteren Ausführungsbeispiel der vorliegenden Erfindung;

Fig. 10    Randbedingungen im x-y-Verlauf der Trajektorie, gemäß einem weiteren Ausführungsbeispiel der vorliegenden Erfindung;

Fig. 11    ein Ergebnis der Trajektorienplanung für den Kurveneingang, gemäß einem weiteren Ausführungsbeispiel der vorliegenden Erfindung;

Fig. 12    Ergebnis der Trajektorienplanung für den Kurvenausgang, gemäß einem weiteren Ausführungsbeispiel der vorliegenden Erfindung;

Fig. 13    Ergebnis der Trajektorienplanung für eine unsymmetrische Kurve, gemäß einem weiteren Ausführungsbeispiel der vorliegenden Erfindung; und

Fig. 14    Ergebnis der Trajektorienplanung für eine S-Kurve, gemäß einem weiteren Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

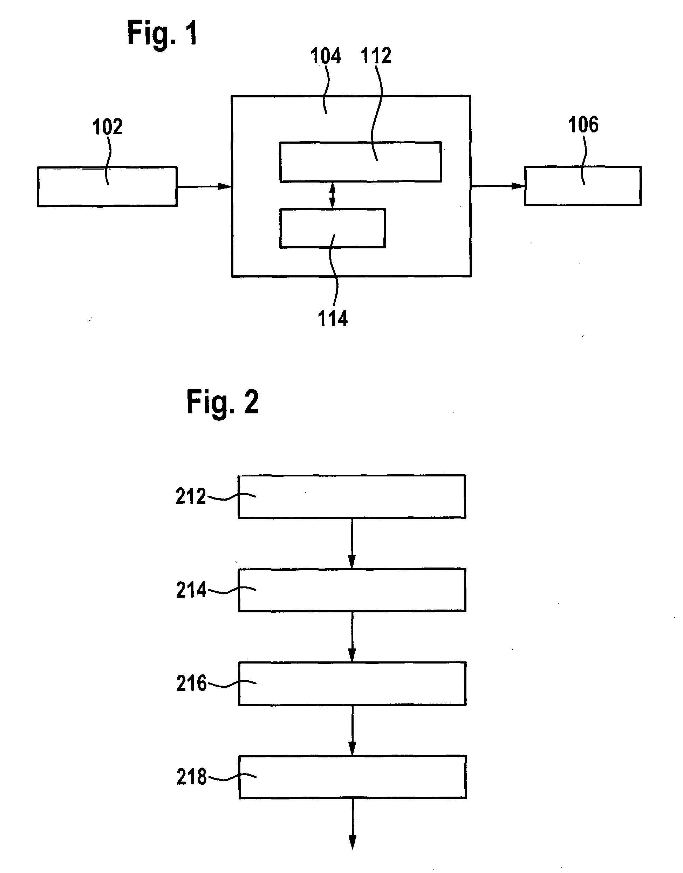

Fig. 1 zeigt einen Aufbau einer Trajektorienplanung, gemäß einem Ausführungsbeispiel der vorliegenden Erfindung. Gezeigt ist eine Fahrzeugsensorik 102, eine Querführung 104 und ein Lenkaktuator 106. Die Querführung 104 kann eine Einrichtung zur Trajektorienplanung 112 und einen Lenkregler 114 aufweisen.

Die Fahrzeugsensorik ist ausgebildet, um für die Trajektorienplanung 112 geeignete Informationen zu erfassen und an die Querführung 104 bereitzustellen. Die Trajektorienplanung 112 und der Lenkregler können miteinander gekoppelt sein. Die Querführung 104 kann ausgebildet sein, um eine Trajektorie zu ermitteln und der Trajektorie entsprechende Lenkinformationen an den Lenkaktuator 106 bereitzustellen.

Die Trajektorienplanung 112 kann in ein LKS-System integriert sein und eine Trajektorie als Sollvorgabe für einen Querregler 104 zu bestimmen.

Aus einer digitalen Karte und einer aktuellen Fahrzeugposition kann der vor dem Fahrzeug liegende Streckenverlauf ermittelt werden. Dieser kann abschnittsweise in Form von Geraden-, Klotoiden- und Kreisbogensegmenten an die Trajektorienplanung 112 übermittelt werden. Der Grund für die Wahl dieser geometrischen Formen liegt darin, dass sie einen stetigen linearen Krümmungsverlauf garantieren. Die Klotoide ist der Übergangsbogen von zwei unterschiedlichen konstanten Krümmungswerten von Gerade und Kreisbogen.

Die Daten aus einer digitalen Karte können mit Videodaten, beispielsweise eines am Fahrzeug angeordneten, vorausschauenden Videosystems, fusioniert werden. Dies ist beispielsweise bei veraltetem Kartenmaterial oder schlechtem GPS-Empfang hilfreich und es können kurzzeitig Abweichungen der Kartendaten von tatsächlichen Krümmungsverläufen kompensiert werden. Damit veränderte Eingangsdaten ausreichend schnell berücksichtigt werden, kann die erfindungsgemäße Trajektorienplanung während der Fahrt mehrmals pro Sekunde zyklisch ablaufen.

Um den Vorteil der theoretisch unbegrenzten Vorausschauweite dank digitaler Kartendaten auszunützen, werden die folgenden Streckenabschnitte vorausgeplant. Bei einem bestimmten Streckenverlauf kann auf die aktuelle Ablage vorausschauend eingewirkt werden. Das heißt, dass eine für den kommenden Kurvenabschnitt ungünstige Ablage im Scheitelpunkt der Kurve im Voraus korrigiert werden kann. Diese Funktionalität kann sehr gut kombiniert werden mit einer Geschwindigkeitsempfehlung für den vor dem Fahrzeug liegenden Kurvenabschnitt.

Die Querführung 104 und insbesondere die Trajektorienplanung 112 können ausgebildet sein, um das erfindungsgemäße Verfahren zur Bestimmung einer Trajektorie umzusetzen oder auszuführen.

Fig. 2 zeigt ein Ablaufdiagramm des erfindungsgemäßen Verfahrens, gemäß einem Ausführungsbeispiel der vorliegenden Erfindung. Das Verfahren kann einen Schritt 212 des Empfangens einer Information über den Kurvenabschnitt über eine Schnittstelle umfassen. Die Information kann beispielsweise von der in Fig. 1 gezeigten Fahrzeugsensorik bereitgestellt werden. In einem weiteren Schritt 214 kann ein Unterteilen des Kurvenabschnitts in ein Klotoidensegment, ein Kreisbogensegment und unter Umständen ein Geradensegment erfolgen. In einem weiteren Schritt 216 können für die einzelnen Segmente Trajektorien bestimmt werden. Erfindungsgemäß können Längen und Krümmungen der Trajektorien so bestimmt werden, dass aus den einzelnen Trajektorien in einem weiteren Schritt 218 eine Gesamttrajektorie bestimmt werden kann. Der Schritt 216 kann übersprungen werden. Im Vergleich zu einer Trajektorie, die in der Mitte einer Fahrspur des Kurvenabschnitts verläuft, kann die Gesamttrajektorie eine kleinere maximale Krümmung aufweisen. Dies kann dadurch erreicht werden, dass im Schritt 216 die Längen und Krümmungen der Trajektorien gemäß entsprechender Vorgaben bestimmt werden. Die Gesamttrajektorie kann von einem Spurhaltesystem als Basis zur Steuerung des Fahrzeugs eingesetzt werden.

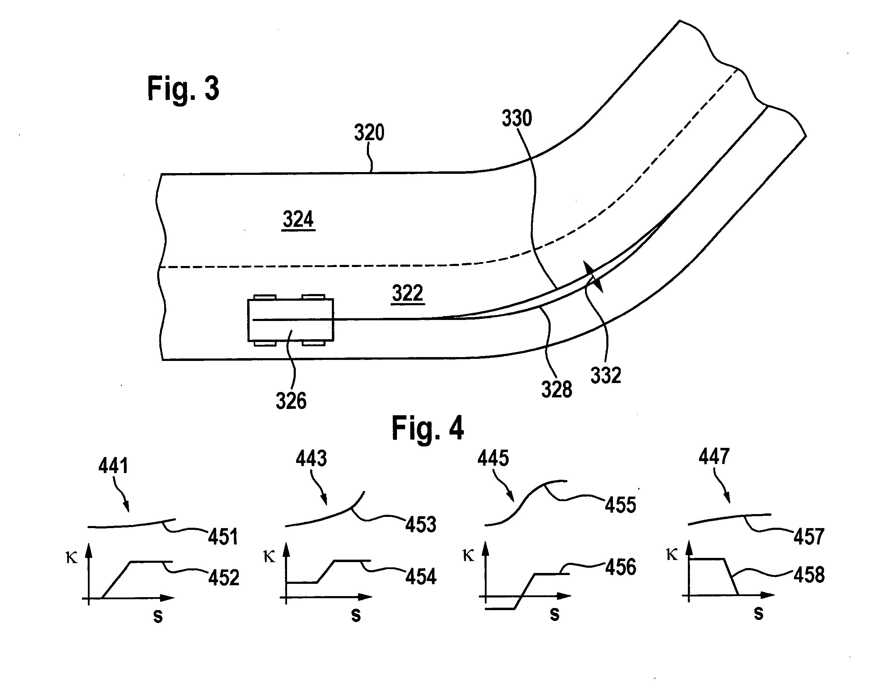

Fig. 3 zeigt einen Vorgang des Kurvenschneidens gemäß einem Ausführungsbeispiel der vorliegenden Erfindung. Gezeigt ist ein Kurvenabschnitt 320 einer Fahrbahn mit einer ersten Fahrspur 322 und einer zweiten Fahrspur 324. Ein Fahrzeug 326 bewegt sich auf der ersten Fahrspur 322. Dabei kann sich das Fahrzeug 326 entlang einer Trajektorie 328 bewegen, die mittig in der ersten Fahrspur 322 verläuft. Erfindungsgemäß wird eine Schnitttrajektorie 330 ermittelt, die ein Kurvenschneiden mit einer lateralen Ablage 332 ermöglicht. Die Ablage 332 kennzeichnet dabei eine laterale Ablage oder einen lateralen Abstand von der Mitte des Fahrstreifens 328. Aufgrund der lateralen Ablage 332 verläuft die Schnitttrajektorie 330 auf der kurveninneren Seite der Mitte des Fahrstreifens 328. Die laterale Ablage 332 kann sich über den Verlauf der Schnitttrajektorie 330 verändern und beispielsweise im Scheitelpunkt des Kurvenabschnitts 320 am größten sein. Beispielsweise kann eine Größe der Ablage 332 ausgehend vom Beginn des Kurvenabschnitts 320 kontinuierlich bis zum Scheitelpunkt ansteigen und anschließend kontinuierlich bis zum Ende des Kurvenabschnitts 320 abfallen. Am Beginn und am Ende des Kurvenabschnitts 320 kann die Ablage 332 "Null" betragen.

Dabei kann ein erfindungsgemäßer Algorithmus dafür sorgen, dass beim Durchfahren der Kurve 320 die Krümmung der Trajektorie 330 gegenüber dem Kurvenverlauf 328 systematisch verringert und gleichzeitig ein bestimmter Abstand 332 zur Fahrspurmitte eingehalten wird.

Kurven sind derart aufgebaut, dass nach einer Gerade der Krümmungswert zunächst linear mit der Bogenlänge ansteigt (Kurveneingang mit Klotoide), dann konstant bleibt (Kreisbogen mit Scheitelpunkt) oder unterschiedliche Krümmungen erreicht, die jeweils mit Klotoidensegmenten verbunden werden, und wieder abfällt (Kurvenausgang mit Klotoide). Die Anzahl der Kurvenparameter für eine Kurve ist daher nicht festgelegt. Die einfachste Kurve besteht aus drei Segmenten (ohne die umgebenden Geraden), eine S-Kurve besteht dann aus fünf Segmenten (Klotoide - Kreisbogen - Klotoide - Kreisbogen - Klotoide). Eine sich zuziehende oder öffnende Kurve besteht ebenfalls aus fünf Segmenten (ohne die umgebenden Geraden), die jedoch alle das gleiche Krümmungsvorzeichen besitzen. Es sind des Weiteren Kurvenverläufe denkbar, die unsymmetrische und S-Kurven kombinieren und daher eine höhere Anzahl an Kurvenparametern besitzen. Deswegen muss die Planung der Trajektorie einzeln für die aufeinanderfolgenden Kurvensegmente erfolgen.

In diesem Sinne wird die Planung der Schnittkurve immer für einen Teil der Kurve bestehend aus Gerade oder Kreisbogen, Klothoide, Kreisbogen oder Gerade durchgeführt. Daraus ergeben sich vier Fälle (sogenannte Basiselemente), die miteinander kombiniert jeden möglichen Straßenverlauf beschreiben können.

Fig. 4 zeigt eine Darstellung von vier Basiselementen, gemäß unterschiedlichen Ausführungsbeispielen der vorliegenden Erfindung, jeweils dargestellt mit x-y-Koordinaten, im oberen Bildteil und mit entsprechenden Krümmungsdaten, im unteren Bildteil, die den Krümmungsverlauf über den Weg darstellen.

Ein erstes Basiselement repräsentiert einen Kurveneingang 441, ein zweites Basiselement eine unsymmetrische Kurve 443, ein drittes Basiselement eine S-Kurve 445 und ein viertes Basiselement einen Kurvenausgang 447.

Bei einem Kurveneingang 441 werden die Elemente Gerade, Klothoide und Kreisbogen aneinandergeheftet und bei einem Kurvenausgang 447 Kreisbogen, Klothoide und eine weitere Gerade. Eine unsymmetrische Kurve 443 besteht aus einem Kreisbogen, einer Klothoide und einem Kreisbogen. So werden Kurven mit gleichen Krümmungsvorzeichen dargestellt, die sich zuziehen oder aufweiten. Die S-Kurven 445 setzen sich aus den gleichen Elementen zusammen, mit dem Unterschied, dass im Klothoidenabschnitt die Krümmung einen Nulldurchgang hat und das Vorzeichen wechselt, die Krümmungsänderung aber weiterhin konstant bleibt. Für eine einfache Rechtskurve benötigt man also zwei Basiselemente. Das erste Basiselement für den Kurveneingang reicht vorzugsweise bis zur Hälfte des Kreisbogens (Scheitelpunkt der Kurve). Dabei müssen Basiselemente nicht notwendigerweise bei der Hälfte des Kreisbogens aufgetrennt werden. Die Stelle an der die Auftrennung erfolgt, kann auch durch einen Parameter vorgegeben werden. Das Zweite für den Kurvenausgang setzt nahtlos an das vorangehende Basiselement an, vorzugsweise ab der Hälfte des gleichen Kreisbogens, und reicht bis zur Gerade. Entsprechend wird mit der unsymmetrischen und der S-Kurve verfahren, die untereinander kombiniert werden können und mit einem Kurveneingang und einem Kurvenausgang eingeleitet und abgeschlossen werden müssen.

Das Problem der Trajektorienplanung ist innerhalb der vier Basiselemente somit jeweils auf sechs Parameter für die Krümmungsbeschreibung $(s_1, K_1)$, $(s_2, K_2)$, und $(s_3, K_3)$ und die zugehörigen Randbedingungen sowie die Nebenbedingungen reduziert worden. Mit Hilfe der Randbedingungen muss sichergestellt werden, dass das Aneinanderheften der Basiselemente in der x-y-Beschreibung stetig und differenzierbar ist. Außerdem müssen in der s-K-Beschreibung Stetigkeit und das Überstreichen des gleichen Gierwinkels garantiert sein. Damit wird die Modularisierung der Trajektorienplanung in die einzelnen Basiselemente konsistent gehalten.

Die Randbedingungen sorgen dafür, dass die Krümmung verringert wird und die Form der Kurve erhalten bleibt. Die Planung innerhalb der Basiselemente erfolgt dermaßen, dass für das Kurvenschneiden ein maximaler lateraler Ablagewert von der Mitte der Fahrspur am Scheitelpunkt als parametrierbares Maß gewählt wird. Die sechs freien Parameter werden so gewählt, dass dieser vom Endpunkt der Trajektorie erreicht werden muss. Somit wird ein Punkt festgelegt, den die zu generierende Trajektorie für den Kurveneingang mit dem gleichen Gierwinkel wie die Mittelspur des Fahrstreifens am Kurvenscheitelpunkt schneiden soll. Unter weiteren Annahmen, die nachfolgend genauer vorgestellt werden, wird der neue Schnittpunkt mit einer verringerten Maximalkrümmung erreicht und somit gezielt die Querbeschleunigung verringert und der Fahrkomfort erhöht.

Für den Kurveneingang 441 ist ein Verlauf einer Trajektorie 451 und ein Koordinatensystem mit einem Krümmungsverlauf 452 über den Weg gezeigt. In dem Koordinatensystem ist auf der Abszisse der Weg s und auf der Ordinate die Krümmung κ aufgetragen. Die Trajektorie 451 weist in einem ersten Bereich keine Krümmung, in einem mittleren Bereich eine linear ansteigende Krümmung und in einem Endbereich einen konstanten Krümmungswert ungleich Null auf.

Für die unsymmetrische Kurve 443 ist ein Verlauf einer Trajektorie 453 und das Koordinatensystem mit einem Krümmungsverlauf 454 über den Weg gezeigt. Die Trajektorie 453 weist in einem ersten Bereich einen konstanten Krümmungswert ungleich Null, in einem mittleren Bereich eine linear ansteigende Krümmung und in einem Endbereich einen konstanten Krümmungswert ungleich Null auf.

Für die S-Kurve 445 ist ein Verlauf einer Trajektorie 455 und das Koordinatensystem mit einem Krümmungsverlauf 456 über den Weg gezeigt. Die Trajektorie 455 weist in einem ersten Bereich einen konstanten ersten Krümmungswert ungleich Null, in einem mittleren Bereich eine linear ansteigende Krümmung und in einem Endbereich einen konstanten zweiten Krümmungswert ungleich Null auf. Der erste und der zweite Krümmungswert weisen unterschiedliche Vorzeichen auf, da sich die Krümmungsrichtung der S-Kurve 445 im Verlauf über den Weg umkehrt.

Für den Kurvenausgang 447 ist ein Verlauf einer Trajektorie 457 und ein Koordinatensystem mit einem Krümmungsverlauf 458 über den Weg gezeigt. Die Trajektorie 457 weist in einem ersten Bereich einen konstanten Krümmungswert ungleich Null, in einem mittleren Bereich eine linear abfallende Krümmung und in einem Endbereich keine Krümmung auf.

Die gezeigten Kurvenverläufe sind nur beispielhaft gewählt. So können Krümmungswerte auch ein negatives Vorzeichen haben. Insbesondere bei der unsymmetrischen Kurve 442 und der S-Kurve 445 können die mittleren Bereich der Krümmungsverläufe 454, 456 auch linear abfallen, sich allgemein ausgedrückt also linear verändern.

Somit kann ein Straßenverlauf in die vier Basiselemente, also Kurveneingänge 441, Kurvenausgänge 447 und Kurvenabschnitte mit sich ändernder Krümmung mit gleichen (unsymmetrischer Kurvenabschnitt) Krümmungsvorzeichen 443 und unterschiedlichen (S-Kurvenabschnitt) Krümmungsvorzeichen 445 aufgeteilt werden.

Die vier Basiselemente 441, 443, 445, 447 können sich jeweils aus drei geometrischen Formen zusammensetzen, wobei als Übergang zwischen zwei verschiedenen Krümmungswerten immer ein Klotoidensegment gesetzt wird, um einen stetigen Krümmungsverlauf zu gewährleisten. Die Basiselemente 441, 443, 445, 447 werden jeweils einzeln behandelt, d.h. es wird mit einem Algorithmus eine Trajektorie ermittelt, mit dem die Kurve in geeigneter Weise geschnitten werden kann, und entsprechend dem Streckenverlauf aneinander gereiht. Um einen nahtlosen und glatten Übergang zu gewährleisten, müssen für die Behandlung der einzelnen Basiselemente 441, 443, 445, 447 gewisse Nebenbedingungen eingehalten werden.

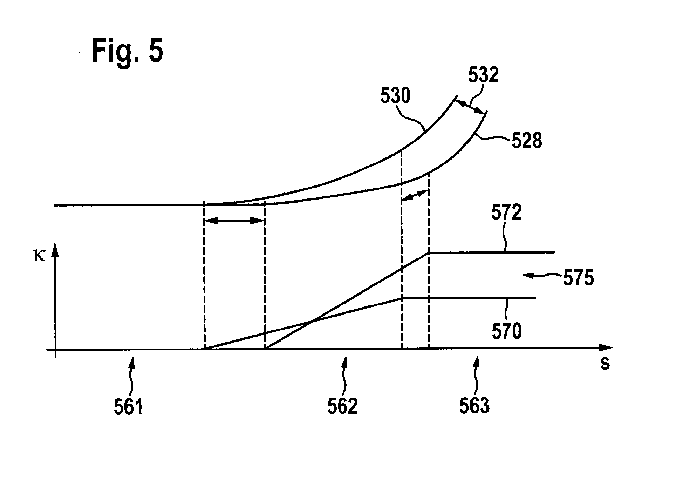

Fig. 5 zeigt ein Kurvenschneiden am Beispiel des Kurveneingangs.

Im oberen Bildabschnitt sind eine Trajektorie 528, eine geplante Schnitttrajektorie 530 und eine laterale Ablage 532 gezeigt. Die Trajektorie 528 kann dem eigentlichen Kurvenverlauf, beispielsweise entlang der Mitte der Fahrspur, entsprechen. Die Trajektorie 528 ist in drei Abschnitte aufgeteilt, wobei ein erster Abschnitt keine Krümmung, ein zweiter Abschnitt eine linear ansteigende Krümmung und ein dritter Abschnitt eine konstante maximale Krümmung aufweist. Die Schnitttrajektorie 530 weist eine maximale Krümmung auf, die geringer ist, als die maximale Krümmung der Trajektorie 528. Die Ablage 532 vergrößert sich in Richtung des Kurvenendes und weist an dem Endpunkt beider Trajektorien 528, 530 einen Wert A_s auf.

Auf der Abszisse ist die Bogenlänge s aufgetragen. Diese gilt für die Krümmungsverläufe 570, 572 jedoch nicht für die Trajektorien 528, 530.

In dem unteren Bildabschnitt ist ein Koordinatensystem gezeigt, bei dem auf der Abszisse der Weg s und auf der Ordinate die Krümmung $\kappa$ aufgetragen sind. Gezeigt sind ein erster Abschnitt 561, ein zweiter Abschnitt 562 und ein dritter Abschnitt 563, die den entsprechenden Abschnitten der Trajektorie 528 oder der Schnitttrajektorie 530 entsprechen können. In dem Koordinatensystem ist ein Krümmungsverlauf 570 für die Trajektorie 528 und ein Krümmungsverlauf 572 für die Schnitttrajektorie 530 aufgetragen. Im ersten Abschnitt 561 sind beide Krümmungsverläufe 570, 572 gleich Null. Typischerweise ist eine Länge der Geraden des Krümmungsverlaufs 572 für die Schnitttrajektorie 530 im ersten Abschnitt 561 kürzer als die Länge der Geraden des Krümmungsverlaufs 570 für die Trajektorie 528. Im zweiten Abschnitt 562 weist der Krümmungsverlauf 570 eine geringere Steigung als der Krümmungsverlauf 572 auf. Im dritten Abschnitt 563 ist eine Verringerung 575 der maximalen Kurvenkrümmung bei dem Krümmungsverlauf 570, der der geplante Schnitttrajektorie 530 zugeordnet ist, im Vergleich zu dem Krümmungsverlauf 572 gezeigt.

Um die Schnitttrajektorie 530 zu bestimmen kann zunächst die angestrebte Ablage 532 A_s im Scheitelpunkt und anschließend ein maximaler Krümmungsverlauf oder eine Länge des Kreissegments im dritten Abschnitt 563 definiert werden. Ausgehend davon können ein Krümmungsverlauf und eine Länge des Klotoidensegments im zweiten Abschnitt 562 und schließlich eine Länge des Geradensegments im ersten Segment 561 bestimmt werden, so dass bestimmte Nebenbedingungen eingehalten werden, und Anfangsabschnitte der Trajektorien 528, 530 in Bezug auf Ablage und Winkelrichtung zusammenfallen.

Um einen bestimmten Ablagewert 532 am Kurvenscheitelpunkt zu erzielen, können somit z.B. für das Basiselement Kurveneingang, bestehend aus Gerade, Klotoide und Kreisbogen die Längen der drei Segmente sowie die Krümmung von Klothoide bzw. Kreisbogen variiert werden, wie es in Fig. 5 gezeigt ist.

Der jeweils angestrebte Ablagewert A_s 532 im Kurvenscheitelpunkt kann von der Kurvengeschwindigkeit und der Maximalkrümmung der Kurve abhängen. Um den abgebildeten Kurvenverlauf 530 zu erhalten müssen folgende Bedingungen eingehalten werden. Als erste Bedingung gilt, dass sich das fertig geplante Basiselement nahtlos in den Trajektorienverlauf einfügen lässt. Eine weitere Bedingung ist, dass die Übergänge an den Nahtstellen jeweils glatt sind, was bedeutet, dass die Schnitttrajektorie die gleiche Gierwinkeländerung beim Fahrzeug bewirken soll wie die Trajektorie auf der Fahrbahnmitte. Des Weiteren soll der Lenkwinkel nur natürlichen Bewegungen folgen, also soll der Lenkwinkelverlauf kontinuierlich und näherungsweise linear in der Zeit, also mit gleichbleibender Lenkgeschwindigkeit, ansteigen und abfallen. Außerdem soll die geplante Schnittkurve grundsätzlich den Streckenverlauf abbilden, um einen sinnvollen Verlauf der Schnitttrajektorie 530 zu gewährleisten. Als letzte Maßgabe gilt, dass das Kurvenschneiden mit garantiert verringerter Krümmung und Lenkbewegung erfolgt und das Fahrzeug dabei zu keinem Zeitpunkt die Fahrspur verlässt.

Die Auswirkungen auf die einzelnen Krümmungsabschnitte und auf den Trajektorienverlauf 530 sind in Fig. 5 in den Abschnitten 561, 562, 563 dargestellt. Im dritten Abschnitt 563 wird die maximale Kürveneingangskrümmung verringert und die Segmentlänge beibehalten (ähnlicher Verlauf der Schnitttrajektorie). Als Folge verlängert sich das Klotoidensegment im zweiten Abschnitt 562, um den glatten Verlauf an den Nahtstellen zu gewährleisten (gleicher Gierwinkel). Das Geradensegment im ersten Abschnitt 561 verkürzt sich, damit der angepeilte Ablagepunkt erreicht wird. Die einzigen frei parametrierbaren Werte in diesem Kurvenabschnitt sind die Länge des Kreisbogens im dritten Abschnitt 563 und die Länge der gewünschten Ablage 532 im Kurvenscheitelpunkt A_s. Es existiert immer eine Lösung mit verringerter maximaler Kurvenkrümmung.

Die Trajektorienplanung kann den einzuhaltenden lateralen Abstand von der Mitte der Fahrspur, die geplante Trajektorienkrümmung und den geplanten Winkel zur Fahrbahnmitte als neue Vorgabe an den LKS-Regler übergeben. Diese Daten können noch mit den Fahrspurinformationen, aus der fahrzeuginternen Videosensorik abgeglichen werden, um fehlerhafte Karteninformationen auszugleichen.

Wenn das Fahrzeug der geplanten Kurve folgt, wird eine größere laterale Abweichung bei geringerer Krümmung und damit kleinerer Lenkbewegung erreicht. Dies bewirkt außerdem einen geringeren Lenkaufwand für den elektrischen Lenkaktor.

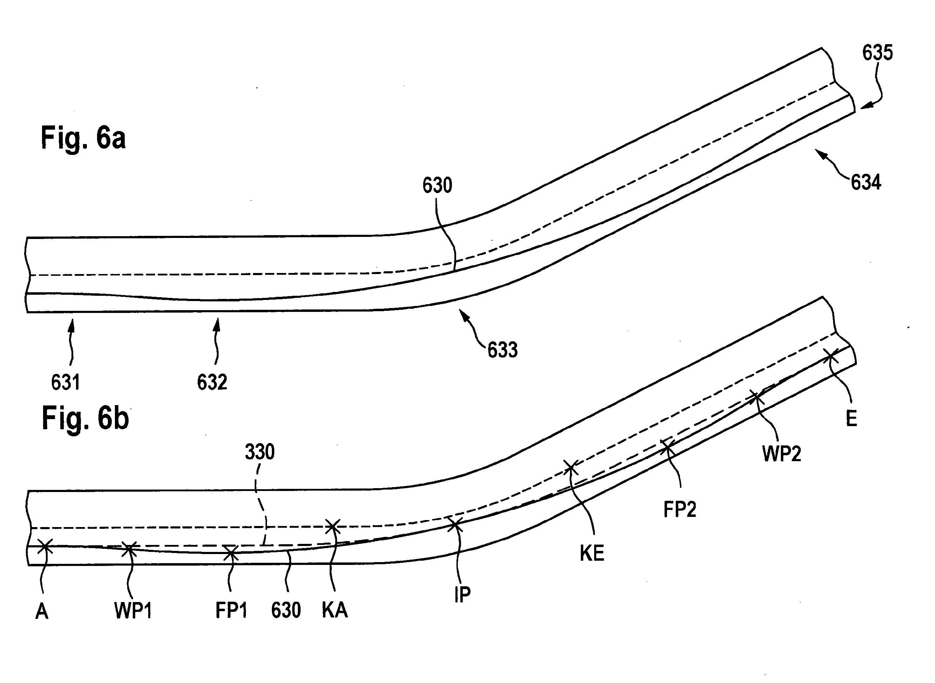

Die Figuren 6a und 6b sind auf weitere Ausführungsbeispiele der vorliegenden Erfindung gerichtet, bei denen ein Anfahren einer Kurve erfolgt. Das Anfahren der Kurve erfolgt zur Minimierung des Trajektorienradius, gegebenenfalls mit Anschneiden, wie es in den weiteren Ausführungsbeispielen beschrieben ist.

Fig. 6a zeigt eine schematische Darstellung einer Kurventrajektorie 630, gemäß einem Ausführungsbeispiel der vorliegenden Erfindung, bei dem ein Anfahren der Kurve erfolgt. Hierbei erfolgt ein Anfahren der Kurve um eine Minimierung der Krümmung für die gesamte Kurventrajektorie zu erhalten. An einer Position 631 erfolgt ein Rechtslenken um auf eine Außenposition 632 der Fahrspur zu gelangen. Ferner ist ein innerer Scheitelpunkt 633 gezeigt. Am Kurvenende 634 erfolgen ein äußerstes Ausfahren der Kurve und anschließend ein Rückführen 635 in die Spurmitte. Dadurch kann eine weitere Krümmungsminimierung erreicht werden, weiter minimiert als ohne Anfahren.

Im Folgenden werden die Rand- und Nebenbedingungen formuliert, warum und wie die einzelnen Segmente (Gerade, Klothoide, Kreisbogen) in den vier Basiselementen zu behandeln sind und welche Folgen sich daraus ergeben.

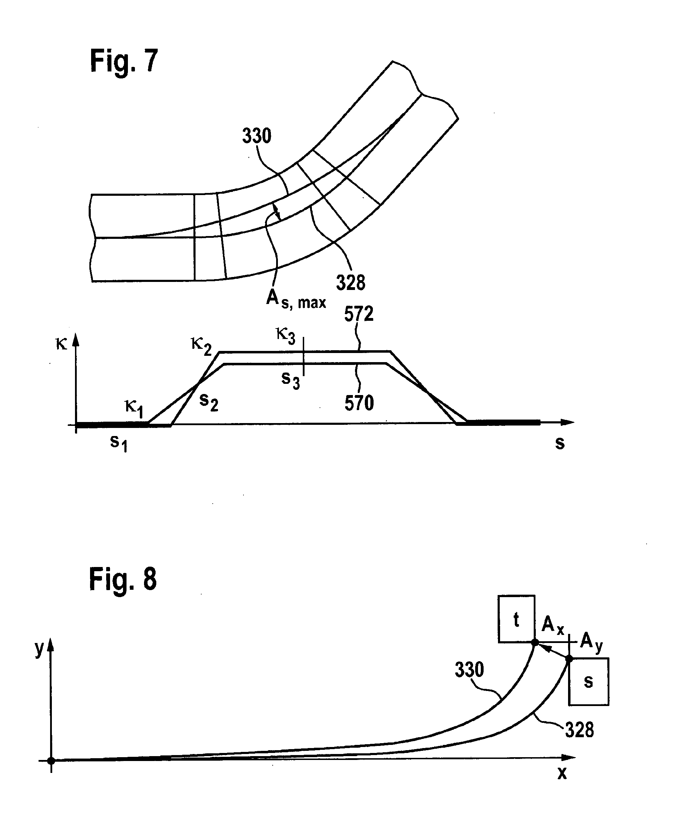

Ein Basiselement besteht aus den sechs Parametern $(s_1,K_1)$, $(s_2,K_2)$, und $(s_3,K_3)$. Durch die Variation dieser Parameter wird ausgehend vom Streckenverlauf eine Trajektorie erzeugt, die die geforderten Bedingungen an den x-y- und s-K-Verlauf erfüllt, wie in Fig. 7 dargestellt.

Fig. 6b zeigt eine weitere schematische Darstellung der in Fig. 6a gezeigten Kurventrajektorie 630, gemäß einem weiteren Ausführungsbeispiel der vorliegenden Erfindung.

Gezeigt ist ein Fahrbahnabschnitt mit zwei durch eine Mittellinie getrennten Fahrspuren. Der Fahrbahnabschnitt weist eine Kurve auf. Die Kurventrajektorie 630 verläuft stellenweise auf der kurvenäußeren Fahrspur. Ferner ist die Schnitttrajektorie 330 gezeigt, die entsprechend dem anhand von Fig. 3 beschriebenen Ausführungsbeispiel bestimmt werden kann. In der Kurve ist einen Beginn der eigentlichen Kurve KA und ein Ende der Kurve KE markiert. Auf der Kurventrajektorie 630 sind ein Anfangspunkt A, ein erster Wendepunkt der Krümmung WP1, ein erster Fußpunkt FP1, ein Scheitelpunkt der Kurve IP, ein zweiter Fußpunkt FP2 und ein zweiter Wendepunkt der Krümmung WP2 aufgetragen.

Der effektive Trajektorienradius kann dadurch verringert werden, dass die Fußpunkte FP1, FP2 der Kurventrajektorie 630 nicht auf der Mitte der Fahrspur liegen, wie es in Fig. 3 gezeigt ist, sondern möglichst weit an den Außenrand der Fahrbahn gelegt werden, so dass die verbindende Kurventrajektorie 630 einen größeren Radius bekommt. Dafür müssen die Fußpunkte FP1, FP2 gleichzeitig vor den Beginn der Kurve KB und hinter das Ende KE gelegt werden und verlängern die Kurve somit virtuell. Die Fußpunkte FP1, FP2 sind entsprechend gleichzeitig die Trajektorienpunkte, die der äußeren Fahrbahnseite am nächsten kommen. Der Abstand ist parametrierbar, oder z.B. auch vom Fahrer einstellbar. Ebenso der Abstand im Scheitelpunkt der Kurve IP, wo das Fahrzeug der Nachbarspur am nächsten kommt (Analog zur Bestimmung des Scheitelpunkts der Schnitttrajektorie 330).

Wie die Punkte A, FP, E, etc. am Ende zu wählen und zu legen sind, ergibt sich aus der Topologie der Straße. Ziel ist es, die maximale Trajektorienkrümmung der schlussendlich gefahrenen Kurventrajektorie 630 zu minimieren unter den genannten Randbedingungen.

Die gesamte Trajektorie beinhaltet damit zusätzlich jeweils ein Segment des Ausholens, das durch die Punkte A und WP1 begrenzt wird, und ein Segment des Wiedereinfangens, das durch die Punkte WP2 und E begrenzt wird. Bei dem Segment des Ausholens handelt es sich um das Anfahren der Kurve, bei dem zuerst entgegen der Hauptkurvenrichtung gefahren wird, um an den äußeren Fahrbahnrand zu gelangen. Dito für das Wiedereinfangen auf die Mitte der Fahrspur.

Das Kurvensegment zum Durchfahren der Hauptkurve, also zwischen dem ersten Wendepunkt WP1 und dem zweiten Wendepunkt WP2 der Krümmung, legt daher auch einen größeren Kreisbogen zurück, als die Kurve selber lang ist. Das mit Kurvensegment bezeichnete Segment kann auch durch ein oder mehrere Klothoidensegmente oder andere Funktionsstücke dargestellt werden.

Die in Fig. 6 beschriebene Methodik des Anfahrens kann auch den weiteren Ausführungsbeispielen analog als Erweiterung dienen. Die Schnitttrajektorie 330 würde hierbei durch die Kurventrajektorie 630 mit ihren zusätzlichen Klothoiden- und Kreisbodensegmente ersetzt werden.

Fig. 7 zeigt eine veranschaulichte Darstellung für die Formulierung der Rand- und Nebenbedingungen. Im oberen Bereich ist ein x-y-Verlauf einer Spurmitte 328 und ein Verlauf einer geplanten Trajektorie 330 gezeigt. Im unteren Bereich ist ein s-κ-Verlauf mit einem Kurvenverlauf 570 für die Spurmitte 328 und einem Kurvenverlauf 572 für die geplanten Trajektorie 330 gezeigt.

Am Anfang bzw. Ende des betrachteten Basiselements müssen Anschlussbedingungen zum vorhergehenden/nachfolgenden Basiselement erfüllt sein. Es ergibt sich das Vorgehen wie folgt. In einer Kurve werden die Basiselemente anhand der Krümmungssegmente (Gerade, Klothoide, Kreisbogen) identifiziert. Der Kurveneingang wird modifiziert, indem die Krümmung minimiert und die Segmentlängen angepasst werden. Somit wird der berechnete Scheitelpunkt als Endpunkt der Kurveneingangstrajektorie erreicht, wie es in Fig. 8 gezeigt ist.

Fig. 8 zeigt eine Trajektorienplanung im x-y-Koordinatensystem, wobei die geplante Trajektorie T 330 aus der Strecke S 328 hervorgeht. Grundvoraussetzung hierfür ist, dass die Trajektorie T den gleichen Startpunkt besitzt wie die Strecke S. Hierfür sorgt die Koordinatentransformation, die einen stetigen und differenzierbaren x-y-Verlauf im Koordinatenursprung sicherstellt.

Der Endpunkt der Trajektorie T entsteht aus der vektoriellen Addition der maximalen lateralen Ablage im rechten Winkel auf den Endpunkt der Strecke S, also

$$x_T - \left(x_s + A_x\right) = 0 \qquad (4.8)$$

$$y_T - \left(y_s + A_y\right) = 0 \qquad (4.9)$$

Hierbei sind $A_x$ und $A_y$ die Komponenten von $A_{s,max}$ im x-y-Koordinatensystem und definiert als

$$A_x = -\mathrm{sgn}\left(\kappa_3\right)\cdot\sin(\psi_E)\cdot A_{s,\mathrm{max}} \qquad (4.10)$$

$$A_y = \mathrm{sgn}\left(\kappa_3\right)\cdot\cos(\psi_E)\cdot A_{s,\mathrm{max}} \qquad (4.11)$$

wobei $\psi_E$ den Gierwinkel am Endpunkt der Strecke im Basiselement darstellt. Die Lösung dieser Gleichungen soll unter der zusätzlichen Annahme geschehen, dass der Gierwinkel auf dem neuen Scheitelpunkt T der gleiche wie auf dem alten Scheitelpunkt S bleibt. Diese Annahme ist unter anderem wichtig, um die Kurvenform und die Modularität der Trajektorienplanung in den Basiselementen zu erhalten. Dem nächsten Teil der Kurve werden für die Optimierung die Ablage im Scheitelpunkt und die neue Krümmung des Kreisbogens mitgegeben. Die Optimierung des kommenden Kurventeils berücksichtigt diese Werte und berechnet selbst eine neue Krümmung am Scheitelpunkt mit passenden Segmentlängen.

Die Nebenbedingungen an den x-y-Verlauf ergeben sich wie folgt. Die maximale Ablage soll im Scheitelpunkt der Trajektorie liegen und zudem von der erwarteten Querbeschleunigung und einem menschlichen Faktor abhängen. Der Ort des Scheitelpunktes wird durch die Aufteilung des Streckenverlaufes in die Basiselemente vorgegeben. Aus Probandenfahrten ging hervor, dass in der überwiegenden Zahl der Fälle in der Mitte des Kreisbogenabschnittes die maximale laterale Ablage erreicht wurde. Die Basiselemente werden nach dieser Beobachtung festgelegt, und somit auch die Scheitelpunkte der Trajektorie. Der Ort des Scheitelpunktes bleibt parametrierbar um die Trajektorienplanung an unterschiedliche Anforderungen/Fahrertypen adaptieren zu können. Als ein Tuningparameter zur Einstellung der Trajektorienform kann die Wahl einer Kreisbogenlänge herangezogen werden. Es bietet sich an, immer die Länge desjenigen Segmentes konstant zu halten, das die Kurvenform am meisten beeinflusst, also die größte Krümmung aufweist. Je nach Basiselement kann diese Bedingung ergänzend herangezogen werden, falls ein Freiheitsgrad von den übrigen Bedingungen nicht behandelt wird.

Die Nebenbedingung, die im s-κ-Verlauf formuliert werden muss, ist die Verringerung der maximalen Krümmung. Diese Bedingung wird umgesetzt mit

$$\kappa_3 < \kappa_3{}^s \qquad (4.12)$$

Wobei $\kappa_3{}^s$ die Krümmung des dritten Streckensegmentes ist. Aus der Vorgabe der RAS ergibt sich weiterhin die Stetigkeit im Krümmungsverlauf, daher ist

$$\kappa_2 < \kappa_3 \qquad (4.13)$$

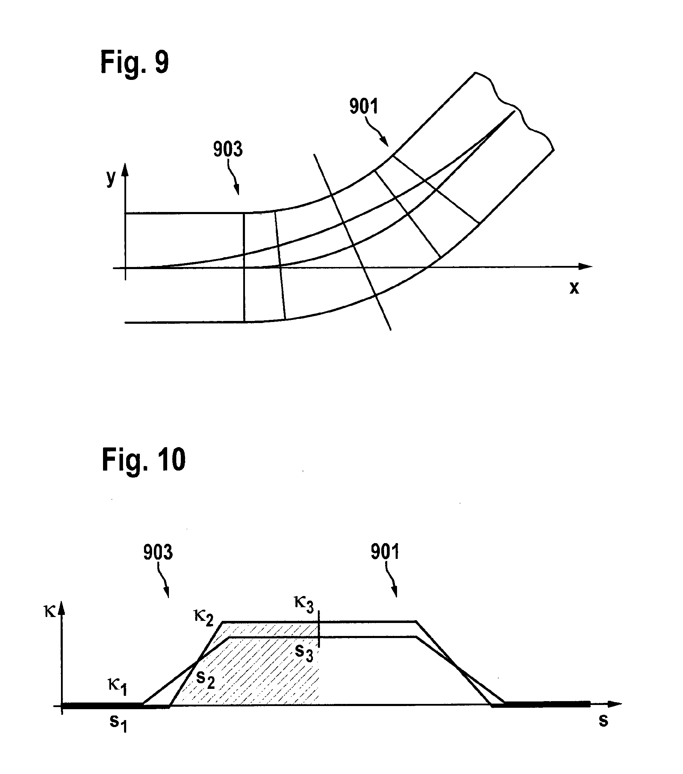

Die Randbedingungen ergeben sich aus der Aufteilung des Strecken- und damit auch des Trajektorienverlaufes in die vier Basiselemente. Damit diese stetig miteinander verknüpft werden können, müssen im x-y- und im s-κ-Verlauf die folgenden Maßnahmen getroffen werden. Der x-y-Verlauf der Trajektorie muss wie die Strecke stetig und differenzierbar sein, wie es in Fig. 9 gezeigt ist. Für einen stetigen Verlauf sorgt die Erfüllung der Gleichungen (4.8) und (4.9). Die Differenzierbarkeit wird erreicht, indem der x-y-Verlauf der Trajektorie eines nachfolgenden Basiselements 901 winkelrichtig an das vorhergehende Basiselement 903 geheftet wird. Diese Anforderungen sind in Fig. 10 für den s-κ-Verlauf dargestellt.

Fig. 10 zeigt die Randbedingungen im x-y-Verlauf der Trajektorie. Für einen stetigen Verlauf sorgt die Erfüllung der Gleichungen (4.8) und (4.9). Die Differenzierbarkeit wird erreicht, indem der x-y-Verlauf der Trajektorie des nachfolgenden Basiselements 901 winkelrichtig an das vorhergehende Basiselement 903 geheftet wird.

Der s-κ-Verlauf soll stetig sein, womit der erste Krümmungswert $\kappa_1$ mit der Endkrümmung des vorigen Basiselementes festgelegt ist.

Die Trajektorie muss weiterhin den gleichen Gierwinkel überstreichen wie die Strecke des Basiselementes, damit Anfangs- und Endpunkt des Basiselementes winkelrichtig eingestellt sind. Diese Bedingung ist einfach umsetzbar im s-κ-Verlauf, da für den Gierwinkel

$$\psi = \int_0^l \kappa(s)\,ds \tag{4.14}$$

gilt, wobei $l$ die Länge des vorliegenden Krümmungsverlaufes beschreibt. Dies bedeutet im Falle des Kurveneingangs, dass das Dreieck unter $\kappa_2$ und das Viereck unter $\kappa_3$ zusammen die gleiche Fläche haben müssen, wie die Fläche unter $\kappa_2{}^s$ und $\kappa_3{}^s$. Es ergibt sich

$$\int_0^l \kappa(s)\,ds - \int_0^{l^s} \kappa^s(s)\,ds = 0 \tag{4.15}$$

wobei $l = \sum_i s_i$ für die Trajektorie und $l^s = \sum_i s^s$ für die Strecke mit i=1,2,3 gilt.

Somit sind die Bedingungen an die Trajektorie allgemein festgelegt. Sie sind jeweils an die Anwendung in den einzelnen Basiselementen wie folgt anzupassen.

Im Folgenden werden die vier Basiselemente einzeln abgehandelt. Jedes der jeweils drei Segmente muss nach den aufgestellten Rand- und Nebenbedingungen in der Länge und der Endkrümmung variiert werden, und zwar so, dass sich die Bedingungen konsistent auf die vier Elemente anwenden lassen. Es ist also hier die Umsetzung der Bedingungen zu einem Algorithmus beschrieben.

Zuerst wird die Trajektorienplanung für das Basiselement Kurveneingang beschrieben.

Der erste Teil einer Kurve ist immer der Kurveneingang, der aus einer Gerade mit der Parametrierung ($s_1{}^s$, $\kappa_1{}^s$), einer Klothoide mit ($s_2{}^s$, $\kappa_2{}^s$) und einem Kreisbogen mit ($s_3{}^s$, $\kappa_3{}^s$) besteht. Die drei Segmente sind beschrieben mit Endkrümmung und Länge, sodass die kartesischen Koordinaten und der Gierwinkel der kompletten Kurveneingangstrajektorie berechnet werden können. Hierbei ist zu beachten, dass bei der Bildung des Basiselements die erste und dritte Segmentlänge halbiert werden, damit die Kurvenabschnitte vor und nach dem Kurveneingang längenrichtig angeheftet werden können und damit der Kurvenscheitelpunkt auf der Hälfte des Kreisbogens liegt und den Endpunkt der Trajektorie darstellt.

Das Problem besteht nun darin, eine Trajektorie zu finden, die als Startpunkt den Koordinatenursprung und als Endpunkt den Punkt $\begin{pmatrix} x_T \\ y_T \end{pmatrix}$ hat, also

$$x_T - (x_s + A_x) = 0 \tag{4.16}$$

$$y_T - \left(y_s + A_y\right) = 0 \qquad (4.17)$$

wobei $x_T = f_x(s_1, s_2, s_3, k_3)$ und $y_T = f_y(s_2, s_3, k_3)$, was die Erfüllung der Randbedingungen für die Stetigkeit im x-y-Verlauf bedeutet.

Der Parameter $\kappa_1$ ist auf Grund der Nebenbedingungen bereits festgelegt auf $k_1 = 0$, außerdem ist $\kappa_2 = \kappa_3$.

Eine Randbedingung lautet, dass der Gierwinkel im Endpunkt der Trajektorie gleich dem der Strecke ist, siehe Gleichung (4.14). Diese Bedingung lässt sich umformulieren zu

$$0.5 \cdot s_2 \kappa_3 + s_3 \kappa_3 - 0.5 \cdot s_2{}^s \kappa_3{}^s - s_3{}^s \kappa_3{}^s = 0 \qquad (4.18)$$

$$s_2 = 2\left(\frac{\kappa_3{}^s}{\kappa_3}\left(0.5 \cdot s_2{}^s + s_3{}^s\right) - s_3\right) \qquad (4.19)$$

Somit sind alle bisherigen Rand- und Nebenbedingungen erfüllt. Es bleibt $y_T = f_y(\kappa_3, s_3)$.

Die Länge des Kreisbogens $s_3$ verbleibt als freier Parameter und wird so eingestellt, dass die Trajektorienform ähnlich der der Kurve ist, womit

$$s_3 = s_3{}^s \qquad (4.20)$$

Es wird nun ein Krümmungswert $\kappa_3$ und ein Längenwert $s_1$ gesucht, der die Gleichungen

$$y_T(\kappa_3) - \left(y_s + A_y\right) = 0 \qquad (4.21)$$

$$x_T(s_1) - \left(x_s + A_x\right) = 0 \qquad (4.22)$$

löst.

Die Funktion fy hat für das Tripel $s_2$, $s_3$, $\kappa_3$ eine eindeutige Lösung. Damit gilt $x_T = f_x(s_1)$. Nachdem Gleichung (4.17) erfüllt wurde, kann der korrekte x-Wert der Trajektorie daher explizit über $s_1$ eingestellt werden, da er keinen Einfluss auf den y-Wert hat.

Eine Einschränkung, die sich aus der Länge von $s_1{}^s$ ergeben kann, ist, dass die vorgegebene laterale Ablage nicht erreicht werden kann. Sie muss mindestens so lang sein, dass sie zum Schneiden der Kurve verwendet werden kann. Betrachtet man Gleichung (4.19) wird der Grund ersichtlich. Die Gierwinkelbedingung sagt, dass mit kleiner werdendem $\kappa_3$ die Länge der Klotoide $s_2$ zunehmen muss. Durch das Kurvenschneiden wird die Gesamtlänge des Basiselements verkürzt, was in einer zusätzlichen Verkürzung von $s_1$ resultiert. Die Länge $s_1$ wird daher bei der Bestimmung der kurventypischen Obergrenze für die Scheitelpunktablage $A_{s,max}$ verwendet.

Für die Lösung der Gleichung (4.21) bleibt als variierbarer Parameter $\kappa_3$, der für die Nullstellensuche auf den Startwert

$$\kappa_3{}^* = \kappa_3{}^s \qquad (4.23)$$

gesetzt wird. Die Nullstellensuche erhält als Nebenbedingung $\kappa_3 < \kappa_3{}^s$.

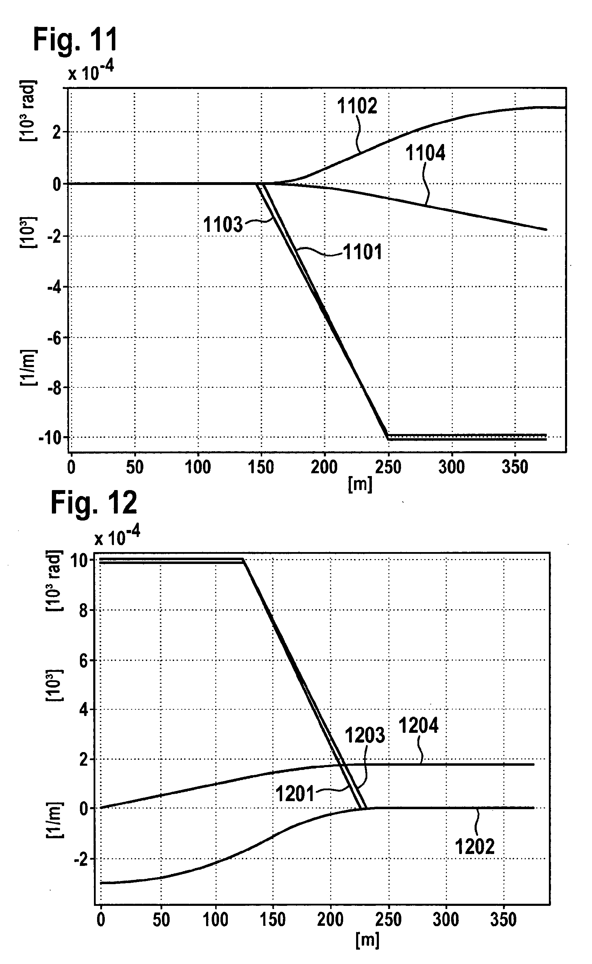

Fig. 11 zeigt als Ergebnis der Trajektorienplanung für den Kurveneingang 1101 die relative laterale Ablage 1102, den Krümmungsverlauf 1003 und den Gierwinkelverlauf 1104.

Im Folgenden wird die Trajektorienplanung für das Basiselement Kurvenausgang beschrieben.

Der Kurvenausgang besteht spiegelsymmetrisch zum Kurveneingang aus einer Aneinanderreihung der Segmente Kreisbogen, Klothoide und Gerade. Um den Programmieraufwand niedrig zu halten, wird das Problem der Trajektorienfindung für den Kurvenausgang transformiert und als Kurveneingang behandelt, indem das 1. und 3. Segment vertauscht werden und die Klothoide entsprechend umgedreht wird. Die Segmente werden parametriert als eine Gerade $(s_1^s, \kappa_1^s)$, eine Klothoide $(s_2^s, \kappa_2^s)$, und ein Kreisbogen $(s_3^s, \kappa_3^s)$.

Da für den LKS-Regler die neue Ablage über dem Weg bestimmt werden muss, ist es notwendig, nach der Trajektorienplanung den Ablage- und Wegvektor zurück zu transformieren. Hierzu werden die Vektoren von hinten nach vorne umgespeichert. Der Wegvektor muss zusätzlich vom Offset bereinigt werden, damit der erste Eintrag im Koordinatenursprung liegt. Für die Krümmungs- und Gierwinkeldaten gilt dies entsprechend.

Das Verfahren zur Bestimmung der Kurvenausgangstrajektorie unterscheidet sich zum Verfahren am Kurveneingang darin, dass hier die Ablage im Kurvenscheitelpunkt $A_{s,max}$ und die minimierte Krümmung $\kappa_3$ bereits vorgegeben sind. An die Trajektorie müssen nur die Bedingungen gestellt werden, die stetige und glatte Übergänge zu den Kurvenabschnitten vor und nach dem Kurvenausgang erzielen. Zwei Krümmungsparameter sind mit $\kappa_1 = 0$ und $\kappa_2 = \kappa_3$ bereits vorgegeben.

Die Erfüllung der Stetigkeit im x-y-Verlauf ergibt

$$x_T - (x_s + A_x) = 0 \qquad (4.24)$$

$$y_T - (y_s + A_y) = 0 \qquad (4.25)$$

wobei $X_T = f_x(s_1, S_2, s_3)$ und $y_T = f_y(s_2, S_3)$.

Der transformierte Anfangspunkt der Schnitttrajektorie muss auf dem Geradensegment der Kurvenmittelspur, der Endpunkt auf dem Kurvenscheitelpunkt, also dem Endpunkt des vorigen Kurvenabschnittes, liegen.

Der Parameter $s_2$ wird für die Erfüllung der Gierwinkelbedingung herangezogen. Es ergibt sich

$$0.5 \cdot s_2 \kappa_3 + s_3 \kappa_3 - 0.5 \cdot s_2^s \kappa_3^s - s_3^s \kappa_3^s = 0 \qquad (4.26)$$

$$s_2 = 2 \cdot \left( \frac{\kappa_3^s}{\kappa_3} \left( 0.5 \cdot s_2^s + s_3^s \right) - s_3 \right) \qquad (4.27)$$

Wie im Falle des Kurveneinganges wird aufgrund der Unabhängigkeit der Gleichung (4.25) vom Parameter $s_1$ diese gelöst, ehe die Gleichung (4.25) dann explizit nach $s_1$ aufgelöst wird.

Die Nullstellensuche in (4.25) kann dann initialisiert werden mit der Startbedingung

$$s_3^* = s_{3.0} \qquad (4.28)$$

Nachdem $s_2$ und $s_3$ durch Lösen von (4.25) gefunden wurden, kann $s_1$ durch Lösen von (4.24) ermittelt werden.

Fig. 12 zeigt als Ergebnis der Trajektorienplanung, die Streckenführung 1201, die relative laterale Ablage 1202, den Krümmungsverlauf 1203 und den Gierwinkelverlauf 1204.

Im Folgenden wird die Trajektorienplanung für das Basiselement unsymmetrische Kurve beschrieben.

Als unsymmetrische Kurve wird hier eine Kurve bezeichnet, die einen abschnittsweise konstanten Krümmungsverlauf ungleich Null besitzt. Die verwendeten geometrischen Elemente sind ein Kreisbogen $(s_1^s, \kappa_1^s)$, eine Klothoide $(s_2^s, \kappa^s)$, und ein zweiter Kreisbogen $(s_3^s, \kappa_3^s)$. Dabei haben die Krümmungen $\kappa_1^s$ und $\kappa_3^s$ dasselbe Vorzeichen. Als Grundgleichung werden wiederum die Stetigkeitsbedingungen für den x-y-Verlauf gewählt, also

$$x_T - \left(x_s + A_x\right) = 0 \qquad\qquad (4.29)$$

$$y_T - \left(y_s + A_y\right) = 0 \qquad\qquad (4.30)$$

wobei $x_T = f_x(s_1, s_2, s_3)$ und $y_T = f_y(s_1, s_2, s_3, \kappa_3)$ gilt.

Die Krümmung $\kappa_1$ im ersten Kreisbogenstück der Trajektorie wird vom vorigen Trajektorienabschnitt bereits vorgegeben. Es verbleiben die vier Freiheitsgrade in $(s_1, s_2, s_3, \kappa_3)$, um die Schnittkurve zu erzeugen. Als Bedingungen neben den obigen Stetigkeitsbedingungen im xy- Verlauf und s-κ-Verlauf bleiben die Gierwinkelbedingung und die Forderung, dass die Kurvenform erhalten bleiben soll. Die Parameter beider Gleichungen müssen nun abhängig voneinander bestimmt werden.

Der Anfangspunkt der Trajektorie ist der Scheitelpunkt der vorigen Schnitttrajektorie, der Endpunkt ist der neue Scheitelpunkt, der mit Hilfe von $A_{s,max}$ bestimmt wird.

Die Gierwinkelbedingung ergibt sich zu

$$s_1 k_1 + 0.5 \cdot s_2(k_1 + k_3) + s_3 k_3 - s_1{}^s k_1{}^s - 0.5 \cdot s_2{}^s\left(k_1{}^s + k_3{}^s\right) - s_3{}^s k_3{}^s = 0 \qquad (4.31)$$

$$s_2 = \frac{2 s_1{}^s k_1{}^s + s_2{}^s\left(k_1{}^s + k_3{}^s\right) + 2 s_3{}^s k_3{}^s - 2 s_1 k_1 - 2 s_3 k_3}{k_1 + k_3} \qquad (4.32)$$

Bei einer unsymmetrischen Kurve kann es sich entweder um eine sich zuziehende oder um eine sich öffnende Kurve handeln. Um die Bedingung zu erfüllen, dass die Trajektorie einen der Straße ähnlichen Verlauf haben soll, wird bei einer sich zuziehenden Kurve mit $\left|\kappa_1^S\right| < \left|\kappa_3^S\right|$ der letzte verbleibende Freiheitsgrad in $s_3$ festgelegt auf

$$s_3 = s_3^S. \qquad\qquad (4.33)$$

Alternativ wird bei einer sich öffnenden Kurve mit $\left|\kappa_1^S\right| > \left|\kappa_3^S\right|$ der Parameter $s_1$ verwendet, damit ergibt sich

$$s_1 = s_1^S. \qquad\qquad (4.34)$$

Dieser Freiheitsgrad kann wie für die Kurveneinfahrt als Tuningparameter eingesetzt werden, um die geplante Trajektorie für die Probandenfahrten zusätzlich parametrierbar zu machen.

Das Gleichungssystem (4.29) und (4.30) wird mit Hilfe einer zweidimensionalen Nullstellensuche gelöst

$$\begin{aligned} x_T(s_1, \kappa_3) - \left(x_s + A_x\right) &= 0 \\ y_T(s_1, \kappa_3) - \left(y_s + A_y\right) &= 0 \end{aligned} \qquad (4.35)$$

Daraus ergibt sich für den Fall der sich zuziehenden Kurve eine Nullstellensuche für $s_1$ und $\kappa_3$ mit den Anfangsbedingungen

$$s_1^* = s_1^s \qquad (4.36)$$

$$\kappa_3^* = \kappa_3^s \qquad (4.37)$$

Die Gleichung ist unter der Berücksichtigung der Nebenbedingung $\kappa_3 < \kappa_3^s$ zu lösen.

Wie im Falle des Kurveneinganges wurde die Länge des zweiten Kreisbogensegmentes $s_3$ auf die Länge $s_3^s$ festgesetzt. Außerdem wird mit einer verringerten Krümmung $\kappa_3$ versucht, einen bestimmten x-y Koordinatenwert zu erreichen. Hierbei muss noch ein weiterer Parameter miteinbezogen werden, in Analogie zum Kurvenausgang ist dieser die Länge des ersten Kreisbogensegmentes $s_1$.

Wie in den beiden vorigen Fällen wird der korrekte Gierwinkel über die Länge der Klothoide $s_2$ eingestellt. Die Nullstellensuche für die unsymmetrische Kurve setzt sich also aus einer Nullstellensuche in zwei Variablen zusammen, wobei die Lösung der Problemstellung aus einer Synthese der Problemlösungen für die Kurvenein- und Kurvenausfahrt besteht.

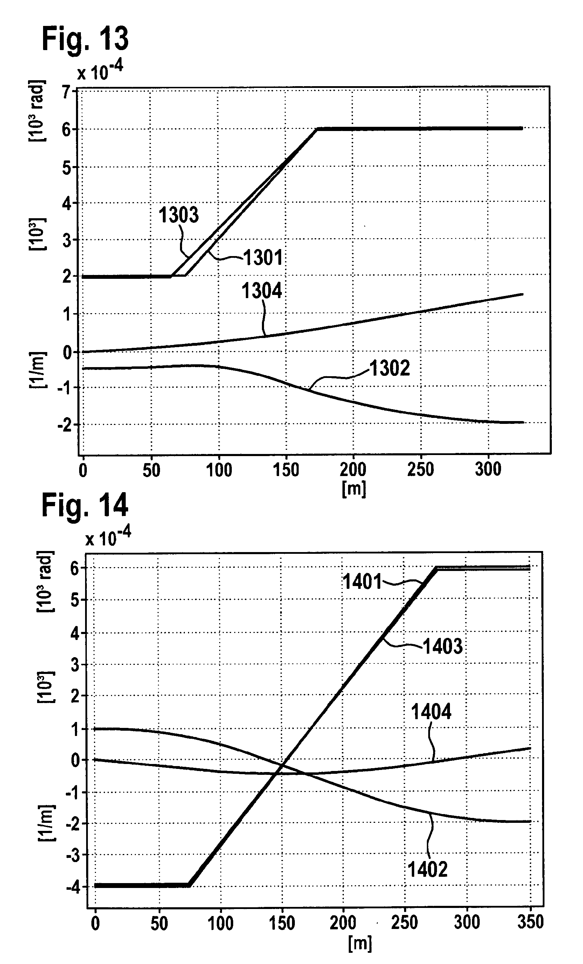

Fig. 13 zeigt als Ergebnis der Trajektorienplanung für eine unsymmetrische Kurve 1301 die relative laterale Ablage 1302, den Krümmungsverlauf 1303 und den Gierwinkelverlauf 1304 einer sich zuziehenden Kurve.

Im Folgenden wird die Trajektorienplanung für das Basiselement S-Kurve beschrieben.

Die S-Kurve unterscheidet sich von der unsymmetrischen Kurve darin, dass die Krümmungen beider Kreisbögen unterschiedliche Vorzeichen besitzen. Die Kurve wird parametriert mit einem Kreisbogen ($s_1^s$, $\kappa_1^s$), einer Klothoide ($s_2^s$, $\kappa_2^s$), und einem zweiten Kreisbogen ($s_3^s$, $\kappa_3^s$).

Als Grundgleichungen werden wiederum die Stetigkeitsbedingungen für den x-y-Verlauf gewählt, also

$$x_T - (x_s + A_x) = 0 \qquad (4.38)$$

$$y_T - (y_s + A_y) = 0 \qquad (4.39)$$

wobei $x_T = f_x(s_1, s_2, s_3)$ und $y_T = f_y(s_1, s_2, s_3, \kappa_3)$ gilt.

Die Krümmung $\kappa_1$ des ersten Kreisbogenstückes der Trajektorie wird im vorigen Trajektorienabschnitt bereits bestimmt. Es verbleiben die vier Freiheitsgrade ($s_1$, $s_2$, $s_3$, $\kappa_3$), um die Trajektorie zu erzeugen. Weitere Bedingungen sind neben den Stetigkeitsbedingungen im x-y-Verlauf und s-$\kappa$-Verlauf die Gierwinkelbedingung und die Bedingung, dass die Kurvenform erhalten bleiben soll. Die Formulierung dieser Bedingung unterscheidet sich von den vorigen Formulierungen, da bei einer S-Kurve die Kreisbogenstücke oft annähernd punktsymmetrisch im Krümmungsverlauf und im x-y-Verlauf sind. Daher ist es nicht sinnvoll, eine Klotoidenlänge konstant zu halten während die andere verändert werden würde, weil dadurch die Trajektorienform erheblich von der Kurvenform abweichen würde. Die Parameter beider Gleichungen müssen wie im Falle der unsymmetrischen Kurve wiederum abhängig voneinander bestimmt werden.

Ein Freiheitsgrad sorgt dafür, die Gierwinkelbedingung zu erfüllen. Es muss gelten, dass

$$F = s_1 \kappa_1 + 0.5 \cdot s_2 (\kappa_1 + \kappa_3) + s_3 \kappa_3 \qquad (4.40)$$

$$F^s = s_1^s \kappa_1^s + 0.5 \cdot s_2^s (\kappa_1^s + \kappa_3^s) + s_3^s \kappa_3^s \qquad (4.41)$$

$$F = F^s \qquad (4.42)$$

wobei F und $F^s$ das Integral des Krümmungsverlaufes über dem Weg beschreiben. Der nächste Freiheitsgrad wird dazu verwendet, die Bedingung zu erfüllen, dass die Schnittkurve grob die Form der Strecke beibehält. Es werden die Längen der Kreisbogensegmente in die Relation

$$\frac{s_1}{s_1^{\,s}} = \frac{s_3}{s_3^{\,s}} \qquad\qquad (4.47)$$

$$s_3 = \frac{s_1}{s_1^{\,s}} s_3^{\,s} \qquad\qquad (4.48)$$

gesetzt.

Setzt man nun die Gleichungen (4.40), (4.41) und (4.48) in (4.42) ein, erhält man die Länge des ersten Kreisbogenstückes als Funktion von $s_2$ und $\kappa_3$ zu

$$s_1 = \frac{s_1^{\,s}\kappa_1^{\,s} + 0.5 \cdot s_2^{\,s}\left(\kappa_1^{\,s} + \kappa_3^{\,s}\right) + s_3^{\,s}\kappa_3^{\,s} - 0.5 \cdot s_2\left(\kappa_1 + \kappa_3\right)}{\kappa_1 + \dfrac{s_3^{\,s}}{s_1^{\,s}}\kappa_3}$$

$$(4.49)$$

Falls in dieser Gleichung der Nenner zu Null wird, wird Gleichung (4.42) nach $\kappa_3$ aufgelöst, was die Existenz einer Unstetigkeitsstelle verhindert. Damit ändern sich die freien Parameter und es gilt $\kappa_3 = h(s_2,s_1)$.

Die verbleibenden beiden Freiheitsgrade werden dazu verwendet, die Stetigkeitsbedingungen im x-y-Verlauf zu erfüllen. Dies führt auf die Gleichungen

$$\begin{aligned} x_T\left(s_2,\kappa_3\right) - \left(x_s + A_x\right) &= 0 \\ y_T\left(s_2,\kappa_3\right) - \left(y_s + A_y\right) &= 0 \end{aligned} \qquad\qquad (4.50)$$

Daraus ergibt sich eine Nullstellensuche für $s_2$ und $\kappa_3$ mit den Anfangsbedingungen

$$s_2^{\,*} = s_2^{\,s} \qquad\qquad (4.51)$$

$$\kappa_3^{\,*} = \kappa_3^{\,s} \qquad\qquad (4.52)$$

Die Gleichung ist unter der Berücksichtigung der Nebenbedingung $\kappa_3 < \kappa_3^{\,s}$ zu lösen.

Fig. 14 zeigt als Ergebnis der Trajektorienplanung für eine S-Kurve 1401 die relative laterale Ablage 1402, den Krümmungsverlauf 1403 und den Gierwinkelverlauf 1404.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren zur Bestimmung einer Schnitttrajektorie, die ein Schneiden eines Kurvenabschnitts (320) einer Fahrspur durch ein Fahrzeug (326) ermöglicht, das die folgenden Schritte umfasst:

   Empfangen (212) einer Information über den Kurvenabschnitt (320) über eine Schnittstelle;
   Unterteilen (214) des Kurvenabschnitts in mindestens ein Kurvensegment mit einer Segmentlänge und einer Startkrümmung, wobei das Kurvensegment entweder ein Geradensegment ist oder ein Kreisbogensegment ist oder ein Kurvensegment ist, dessen Krümmung eine Funktion einer Bogenlänge des Kurvensegments ist;
   Bestimmen (218) einer Schnitttrajektorie (330) aus dem mindestens einen Kurvensegment, sodass die Schnitttrajektorie in einem bestimmten Punkt des Kurvenabschnitts (320) eine vorbestimmte Ablage (332) in Bezug auf eine Mitte (328) der Fahrspur aufweist und eine maximale Krümmung der Schnitttrajektorie geringer ist, als eine maximale Krümmung des Kurvenabschnitts.

2. Verfahren gemäß Anspruch 1, bei dem die Schnitttrajektorie (330) mindestens ein Trajektoriensegment mit der Segmentlänge und der Startkrümmung umfasst, wobei das Trajektoriensegment entweder ein Geradensegment ist oder ein Kreisbogensegment ist oder ein Kurvensegment ist, dessen Krümmung eine Funktion der Bogenlänge des Trajektoriensegments ist.

3. Verfahren gemäß einem der vorhergehenden Ansprüche, bei dem der Kurvenabschnitt (320) in eine Mehrzahl von Kurvensegmenten mit einer Segmentlänge und einer Startkrümmung unterteilt wird, wobei die Startkrümmung einer Endkrümmung eines vorangehenden Kurvensegments entspricht, und dessen Krümmung entweder konstant über die Bogenlänge des Kurvensegments in Form eines Geradensegments oder Kreisbogensegment ist, oder sich linear mit der Bogenlänge des Kurvensegments in Form eines Klotoidensegments ändert.

4. Verfahren gemäß einem der vorangegangenen Ansprüche, bei dem die Schnitttrajektorie (330) in eine Mehrzahl von Trajektoriensegmenten mit einer Segmentlänge und einer Startkrümmung unterteilt wird, wobei die Startkrümmung der Endkrümmung eines vorangehenden Trajektoriensegments entspricht, und dessen Krümmung entweder konstant über die Bogenlänge des Trajektoriensegments in Form einer eines Geradensegments oder Kreisbogensegments ist oder sich linear mit der Bogenlänge des Trajektoriensegments in Form eines Klotoidensegments ändert.

5. Verfahren gemäß einem der vorangegangenen Ansprüche, bei dem der Kurvenabschnitt im Schritt des Unterteilens in mindestens ein Kurvensegment in Form eines Klotoidensegments mit einer Klotoidenlänge, einer Klotoidenstartkrümmung und einem Klotoidenparameter, ein Geradensegment mit einer Geradenlänge und in ein ein Kreisbogensegment mit einer Kreisbogenlänge und einer Kreisbogenkrümmung unterteilt wird, wobei die Geradenlänge, die Klotoidenlänge, die Klotoidenstartkrümmung, der Klotoidenparameter, die Kreisbogenlänge und die Kreisbogenkrümmung so eingestellt werden, dass eine maximale Krümmung einer Klotoidentrajektorie und eine Krümmung einer Kreisbogentrajektorie jeweils geringer ist, als eine maximale Krümmung des Kurvenabschnitts, und bei dem die Geradentrajektorie bestimmt wird, die dem Geradensegment zugeordnet ist, die Klotoidentrajektorie bestimmt wird, die dem Klotoidensegment zugeordnet ist und die Kreisbogentrajektorie bestimmt wird, die dem Kreisbogensegment zugeordnet ist, und bei dem die Schnitttrajektorie (330) aus der Geradentrajektorie, der Klotoidentrajektorie und der Kreisbogentrajektorie bestimmt wird.

6. Verfahren gemäß Anspruch 5, bei dem die Geradentrajektorie, die Klotoidentrajektorie und die Kreisbogentrajektorie so bestimmt werden, dass die Schnitttrajektorie (330) in einem Scheitelpunkt des Kurvenabschnitts (320) eine vorbestimmte Ablage (332) ins Kurveninnere in Bezug auf die Mitte der Fahrspur (328) aufweist.

7. Verfahren gemäß einem der Ansprüche 5 oder 6, bei dem die Geradentrajektorie, die Klotoidentrajektorie und die Kreisbogentrajektorie so bestimmt werden, dass eine Winkelrichtung der Schnitttrajektorie (330) in einem Anfangspunkt einer Winkelrichtung der Mitte der Fahrspur (328) in einem Anfangspunkt entspricht und eine Winkelrichtung der Schnitttrajektorie in einem Endpunkt einer Winkelrichtung der Mitte der Fahrspur in einem Endpunkt entspricht.

8. Verfahren gemäß einem der Ansprüche 5 bis 7, bei dem die Geradentrajektorie, die Klotoidentrajektorie und die Kreisbogentrajektorie unter Berücksichtigung einer Fahrzeuggeschwindigkeit und einer Kurvenabschnittskrümmung bestimmt werden.

9. Verfahren gemäß einem der Ansprüche 5 bis 8, bei dem in einem Bereich (631, 635), der unmittelbar an den Kurvenabschnitt (320) anschließt, wenigstens eine weitere Klotoidentrajektorie (A-WP1, WP2-E) oder wenigstens eine weitere Kreisbogentrajektorie so bestimmt werden, dass eine weitere Kurventrajektorie (630) in dem Bereich (631, 635) eine weitere vorbestimmte Ablage (632, 634) in Bezug auf die die Mitte der Fahrspur aufweist.

10. Verfahren gemäß einem der vorangegangenen Ansprüche, mit einem Schritt des Ermittelns einer auf der Schnitttrajektorie basierenden Querführung des Fahrzeugs, wobei die Querführung geeignet ist, um das Fahrzeug (326) entlang der Schnitttrajektorie durch den Kurvenabschnitt (320) zu steuern.

11. Verfahren gemäß einem der vorangegangenen Ansprüche, mit einem Schritt des Unterteilens eines Streckenabschnitts der Fahrbahn in eine Mehrzahl von Kurvenabschnitten, die einen Kurveneingang (441), eine sich zuziehende oder sich öffnende Kurve (443), eine S-Kurve (445) und/oder einen Kurvenausgang (447) darstellen, und für jeden der Mehrzahl der Kurvenabschnitte eine Schnitttrajektorie gemäß einem der vorangegangenen Ansprüche bestimmt wird und wobei eine Trajektorie für den Streckenabschnitt durch ein Aneinanderreihen der Schnitttrajektorien der Mehrzahl der Kurvenabschnitte gebildet wird.

12. Verfahren gemäß einem der vorangegangenen Ansprüche, bei dem im Schritt des Unterteilens (214) der Kurvenabschnitt in ein Geradensegment mit einer Geradenlänge, in ein Klotoidensegment mit einer Klotoidenlänge, einer Klotoidenstartkrümmung und einem Klotoidenparameter sowie in ein Kreisbogensegment mit einer Kreisbogenlänge und einer Kreisbogenkrümmung unterteilt wird, in einem Schritt des Bestimmen (216) eine Geradentrajektorie für das Geradensegment, eine Klotoidentrajektorie für das Klotoidensegment und eine Kreisbogentrajektorie für das Kreisbogensegment bestimmt wird, basierend auf einer Einstellvorschrift, die ausgebildet ist, um die Geradenlänge, die Klotoidenlänge, die Klotoidenstartkrümmung, den Klotoidenparameter, die Kreisbogenlänge und die Kreisbogenkrümmung so einzustellen, dass eine Krümmung der Klotoidentrajektorie und eine Krümmung der Kreisbogentrajektorie jeweils geringer ist, als eine maximale Krümmung des Kurvenabschnitts, und im Schritt des Bestimmens (218) die Schnitttrajektorie (330) aus der Geradentrajektorie, der Klotoidentrajektorie und der Kreisbogentrajektorie bestimmt wird.

13. Steuergerät, das ausgebildet ist, um die Schritte eines Verfahrens gemäß einem der Ansprüche 1 bis 12 durchzuführen.

14. Computerprogrammprodukt mit Programmcode, der auf einem maschinenlesbaren Träger gespeichert ist, zur Durchführung des Verfahrens nach einem der Ansprüche 1 bis 12, wenn das Programm auf einem Steuergerät ausgeführt wird.

**Claims**

1. Method for determining a cutting trajectory which renders it possible to cut a curve section (320) of a lane by a vehicle (326), comprising the following steps:

   receiving (212) information about the curve section (320) by means of an interface;
   subdividing (214) the curve section into at least one curve segment with a segment length and an initial curvature, wherein the curve segment is a straight segment or an arcuate segment or a curve segment, the curvature of which is a function of an arc length of the curve segment;
   determining (218) a cutting trajectory (330) from the at least one curve segment such that the cutting trajectory has predetermined off-centring (332) in relation to a centre (328) of the lane at a specific point of the curve section (320) and a maximum curvature of the cutting trajectory is less than a maximum curvature of the curve section.

2. Method according to Claim 1, in which the cutting trajectory (330) comprises at least one trajectory segment with the segment length and the initial curvature, wherein the trajectory segment is a straight segment or an arcuate segment or a curve segment, the curvature of which is a function of the arc length of the trajectory segment.

3. Method according to either of the preceding claims, in which the curve section (320) is subdivided into a plurality of curve segments with a segment length and an initial curvature, wherein the initial curvature corresponds to a final curvature of a preceding curve segment, and the curvature of which is constant over the arc length of the curve segment in the form of a straight segment or arcuate segment, or changes linearly with the arc length of the curve segment in the form of a clothoid segment.

4. Method according to one of the preceding claims, in which the cutting trajectory (330) is subdivided into a plurality of trajectory segments with a segment length and an initial curvature, wherein the initial curvature corresponds to the final curvature of a preceding trajectory segment, and the curvature of which is constant over the arc length of the trajectory segment in the form of a straight segment or arcuate segment, or changes linearly with the arc length of the trajectory segment in the form of a clothoid segment.

5. Method according to one of the preceding claims, in which, within the step of subdividing, the curve section is subdivided into at least one curve segment in the form of a clothoid segment with a clothoid length, a clothoid initial curvature and a clothoid parameter, a straight segment with a straight length and an arcuate segment with an arcuate length and an arcuate curvature, wherein the straight length, the clothoid length, the clothoid initial curvature, the clothoid parameter, the arcuate length and the arcuate curvature are set in such a way that a maximum curvature of a clothoid trajectory and a curvature of an arcuate trajectory is less in each case than a maximum curvature of the curve section, and in which the straight trajectory assigned to the straight segment is determined, in which the clothoid trajectory assigned to the clothoid segment is determined and the arcuate trajectory assigned to the arcuate segment is determined, and in which the cutting trajectory (330) is determined from the straight trajectory, the clothoid trajectory and the arcuate trajectory.

6. Method according to Claim 5, in which the straight trajectory, the clothoid trajectory and the arcuate trajectory are determined in such a way that the cutting trajectory (330) has predetermined off-centring (332) towards the inside of the curve in relation to the centre of the lane (328) at an apex of the curve section (320).

7. Method according to either of Claims 5 and 6, in which the straight trajectory, the clothoid trajectory and the arcuate trajectory are determined in such a way that an angular direction of the cutting trajectory (330) at an initial point corresponds to an angular direction of the centre of the lane (328) at an initial point and an angular direction of the cutting trajectory at an endpoint corresponds to an angular direction of the centre of the lane at an endpoint.

8. Method according to one of Claims 5 to 7, in which the straight trajectory, the clothoid trajectory and the arcuate trajectory are determined taking into account a vehicle velocity and a curve section curvature.

9. Method according to one of Claims 5 to 8, in which at least one further clothoid trajectory (A-WP1, WP2-E) or at least one further arcuate trajectory are determined in a region (631, 635) immediately adjoining the curve section (320) in such a way that a further curve trajectory (630) has further predetermined off-centring (632, 634) in relation to the centre of the lane in the region (631, 635).

10. Method according to one of the preceding claims, comprising a step of establishing a transverse guidance of the vehicle based on the cutting trajectory, wherein the transverse guidance is suitable for guiding the vehicle (326) along the cutting trajectory through the curve section (320).

11. Method according to one of the preceding claims, comprising a step of subdividing a path section of the lane into a plurality of curve sections, which represent a curve entry (441), a tightening or opening curve (443), an S-curve (445) and/or a curve exit (447), and wherein a cutting trajectory is determined according to one of the preceding claims for each of the plurality of curve sections and wherein a trajectory for the path section is formed by stringing together the cutting trajectories of the plurality of curve sections.

12. Method according to one of the preceding claims, in which, within the step of subdividing (214), the curve section is subdivided into a straight segment with a straight length, into a clothoid segment with a clothoid length, a clothoid initial curvature and a clothoid parameter and into an arcuate segment with an arcuate length and an arcuate curvature, in which, within a step of determining (216), a straight trajectory is determined for the straight segment, a clothoid trajectory is determined for the clothoid segment and an arcuate trajectory is determined for the arcuate segment on the basis of a setting prescription configured to set the straight length, the clothoid length, the clothoid initial curvature, the clothoid parameter, the arcuate length and the arcuate curvature in such a way that a curvature of the clothoid trajectory and a curvature of the arcuate trajectory is less in each case than a maximum curvature of the curve section, and in which, within the step of determining (218), the cutting trajectory (330) is determined from the straight trajectory, the clothoid trajectory and the arcuate trajectory.

13. Control device embodied to carry out the steps of a method according to one of Claims 1 to 12.

14. Computer program product comprising program code stored on a machine-readable medium, for carrying out the method according to one of Claims 1 to 12 when the program is executed on a control device.

**Revendications**

1. Procédé pour déterminer une trajectoire de coupe permettant de couper une section de virage (320) d'une voie de circulation au moyen d'un véhicule (326), comprenant les étapes suivantes :

réception (212) d'une information concernant la section de virage (320) via une interface ;

division (214) de la section de virage en au moins un segment de virage d'une longueur de segment et d'une courbure initiale, le segment de virage étant soit un segment droit soit un segment en arc de cercle soit un segment courbe et sa courbure étant fonction d'une longueur d'arc du segment de virage ;

détermination (218) d'une trajectoire de coupe (330) à partir d'au moins un segment de virage, de sorte que la trajectoire de coupe comporte à un point déterminé de la section de virage (320) un déport (332) prédéterminé plus réduit par rapport au centre (328) de la voie de circulation et qu'une courbure maximale de la trajectoire de coupe est plus réduite qu'une courbure maximale de la section de virage.

2. Procédé selon la revendication 1, dans lequel la trajectoire de coupe (330) comprend au moins un segment de trajectoire avec une certaine longueur de segment et une courbure initiale, le segment de trajectoire étant soit un segment droit soit un segment en arc de cercle soit un segment courbe dont la courbure est fonction de la longueur d'arc du segment de trajectoire.

3. Procédé selon l'une quelconque des revendications précédentes, dans lequel la section de virage (320) est subdivisée en une pluralité de segments de virage présentant une certaine longueur de segment et une certaine courbure initiale, la courbure initiale correspondant à la courbure finale d'un segment de virage précédent et sa courbure étant soit constante sur l'ensemble de la longueur d'arc du segment de virage sous la forme d'un segment droit ou d'un segment en arc de cercle soit variant de façon linéaire avec la longueur d'arc du segment de virage pour prendre la forme d'un segment clothoïde.

4. Procédé selon l'une quelconque des revendications précédentes, dans lequel la trajectoire de coupe (330) est subdivisée en une pluralité de segments de trajectoire présentant une certaine longueur de segment et une certaine courbure initiale, la courbure initiale correspondant-à la courbure finale d'un segment de trajectoire précédent et sa courbure étant soit constante sur l'ensemble de la longueur d'arc du segment de trajectoire sous la forme d'un segment droit ou d'un segment en arc de cercle soit variant de façon linéaire avec la longueur d'arc du segment de trajectoire prenant la forme d'un segment clothoïde.

5. Procédé selon l'une quelconque des revendications précédentes, dans lequel la section de virage est subdivisée à l'étape de division en au moins un segment de virage prenant la forme d'un segment clothoïde présentant une longueur de clothoïde, une courbure initiale de clothoïde et un paramètre de clothoïde, un segment droit présentant une certaine longueur droite et subdivisé en un segment en arc de cercle présentant une certaine longueur d'arc de cercle et une courbure d'arc, la longueur droite, la longueur de clothoïde, la courbure initiale de clothoïde, le paramètre de clothoïde, la longueur d'arc de cercle et la courbure en arc de cercle étant réglées de telle sorte qu'une courbure maximale d'une trajectoire clothoïde et une courbure d'une trajectoire d'arc de cercle est respectivement plus réduite qu'une courbure maximale de la section de virage et dans lequel on détermine la trajectoire droite associée au segment droit, on détermine la trajectoire clothoïde associée au segment clothoïde et on détermine la trajectoire d'arc de cercle associée au segment en arc de cercle et dans lequel la trajectoire de coupe (330) est déterminée à partir de la trajectoire droite, de la trajectoire clothoïde et de la trajectoire d'arc de cercle.

6. Procédé selon la revendication 5, dans lequel la trajectoire droite, la trajectoire clothoïde et la trajectoire d'arc de cercle sont déterminées de telle sorte que la trajectoire de coupe (330) dans un point de crête de la section de virage (320) comporte un déport prédéterminé (332) à l'intérieur de virage par rapport au centre de la voie de circulation (328).

7. Procédé selon l'une quelconque des revendications 5 ou 6, dans lequel la trajectoire droite, la trajectoire clothoïde et la trajectoire d'arc de cercle sont déterminées de telle sorte qu'une direction angulaire de la trajectoire de coupe (330) à un point initial correspond à une direction angulaire du centre de la voie de circulation (328) à un point initial et qu'une direction angulaire de la trajectoire de coupe à un point terminal d'une direction angulaire correspond au centre de la voie de circulation à un point terminal.

**8.** Procédé selon l'une quelconque des revendications 5 à 7, dans lequel la trajectoire droite, la trajectoire clothoïde et la trajectoire d'arc de cercle sont déterminées en tenant compte d'une vitesse du véhicule et d'une courbure de section de virage.

**9.** Procédé selon l'une quelconque des revendications 5 à 8, dans lequel dans une région (631, 635) directement rattachée à la section de virage (320), au moins une trajectoire clothoïde (A-WP1, WP2-E) supplémentaire ou au moins une trajectoire d'arc de cercle supplémentaire sont déterminées, qu'une trajectoire courbe (630) supplémentaire comporte dans la région (631, 635) un départ supplémentaire (632, 634) prédéterminé par rapport au centre de la voie de circulation.

**10.** Procédé selon l'une quelconque des revendications précédentes, avec une étape de détermination d'un guidage transversal du véhicule basé sur la trajectoire de coupe, le guidage transversal étant adapté pour commander le véhicule (326) le long de la trajectoire de coupe tout au long de la section de virage (320).

**11.** Procédé selon l'une quelconque des revendications précédentes, avec une étape de division d'une section de tronçon de la chaussée en une pluralité de sections de virage représentant une entrée de virage (441), un virage (443) s'ouvrant ou s'élargissant, un virage en S (445) et/ou une sortie de virage (447) et une trajectoire de coupe selon l'une quelconque des revendications précédentes étant déterminée pour chaque section parmi la pluralité de sections de virage et une trajectoire étant formée pour la section de tronçon par alignement des trajectoires de coupe de la pluralité de sections de virage.

**12.** Procédé selon l'une quelconque des revendications précédentes, dans lequel on subdivise à l'étape de division (214) la section de virage en un segment droit présentant une certaine longueur droite, en un segment clothoïde présentant une longueur de clothoïde, une courbure initiale de clothoïde et un paramètre de clothoïde ainsi qu'en un segment en arc de cercle présentant une longueur d'arc de cercle et une courbure en arc de cercle, on détermine à l'étape de détermination (216) une trajectoire droite pour le segment droit, une trajectoire clothoïde pour le segment clothoïde et une trajectoire d'arc de cercle pour le segment en arc de cercle, sur la base d'une règle conçue pour régler la longueur droite, la longueur de clothoïde, la courbure initiale de clothoïde, le paramètre de clothoïde, la longueur d'arc de cercle et la courbure en arc de cercle de telle sorte qu'une courbure de la trajectoire clothoïde et une courbure de la trajectoire d'arc de cercle sont respectivement plus réduites qu'une courbure maximale de la section de virage et on détermine à l'étape de détermination (218) la trajectoire de coupe (330) à partir de la trajectoire droite, de la trajectoire clothoïde et de la trajectoire d'arc de cercle.

**13.** Appareil de commande, réalisé pour mettre en oeuvre les étapes d'un procédé selon l'une quelconque des revendications 1 à 12.

**14.** Produit de programme informatique doté d'un code de programmation mémorisé sur un support lisible par machine, servant à la mise en oeuvre du procédé selon l'une quelconque des revendications 1 à 12 lorsque le programme est réalisé sur un appareil de commande.

# Fig. 1

# Fig. 2

**Fig. 3**

**Fig. 4**

# Fig. 5

**Fig. 6a**

**Fig. 6b**

## Fig. 7

## Fig. 8

## Fig. 9

## Fig. 10

## Fig. 11

## Fig. 12

## Fig. 13

## Fig. 14

**IN DER BESCHREIBUNG AUFGEFÜHRTE DOKUMENTE**

**In der Beschreibung aufgeführte Patentdokumente**

- DE 102005056211 A1
- DE 102008003666 A1